(19) Europäisches Patentamt
European Patent Office
Office européen des brevets

(11) **EP 4 429 143 A1**

(12) **EUROPEAN PATENT APPLICATION**
published in accordance with Art. 153(4) EPC

(43) Date of publication:
**11.09.2024 Bulletin 2024/37**

(21) Application number: **22889127.1**

(22) Date of filing: **21.10.2022**

(51) International Patent Classification (IPC):
**H04L 1/18** (2023.01)

(52) Cooperative Patent Classification (CPC):
**H04L 1/18; H04L 1/1812; H04L 5/00;
H04W 72/232; Y02D 30/70**

(86) International application number:
**PCT/CN2022/126653**

(87) International publication number:
**WO 2023/078102 (11.05.2023 Gazette 2023/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.11.2021 CN 202111308683**

(71) Applicant: **Datang Mobile Communications
Equipment Co., Ltd.
Beijing 100085 (CN)**

(72) Inventor: **WANG, Junwei
Beijing 100085 (CN)**

(74) Representative: **Maiwald GmbH
Engineering
Elisenhof
Elisenstrasse 3
80335 München (DE)**

(54) **HYBRID AUTOMATIC REPEAT REQUEST ACKNOWLEDGEMENT FEEDBACK METHOD AND APPARATUS, AND TERMINAL DEVICE**

(57) A hybrid automatic repeat request acknowledgement feedback method, a device and a terminal device are provided, and relates to the field of communication technology. The method executed by a terminal device includes determining a scheduling state of at least one type of transport blocks corresponding to multiple PDSCHs scheduled by first DCI, the scheduling state including an enabled state or a disabled state; generating HARQ-ACK information of the PDSCHs according to the scheduling state of the at least one type of transport blocks and bundling configuration information for PDSCH feedback; wherein any type of the at least one type of transport blocks are transport blocks, having the same identifier, in the PDSCHs.

Determining at least one scheduling state of at least one type of transport blocks corresponding to PDSCHs scheduled by first DCI — S201

Generating HARQ-ACK information for the PDSCHs according to the at least one scheduling state of the at least one type of transport blocks corresponding to the PDSCHs scheduled by the first DCI and bundling configuration information for PDSCH feedback — S202

**Fig.2**

**Description**

**CROSS-REFERENCE TO RELATED APPLICATION**

This application claims a priority to Chinese Patent Application No. 202111308683.3 filed on November 5, 2021, the disclosures of which are incorporated in their entirety by reference herein.

**TECHNICAL FIELD**

The present disclosure relates to the field of communications technology, in particular, relates to a hybrid automatic repeat request acknowledgement feedback method, a hybrid automatic repeat request acknowledgement feedback device and a terminal device.

**BACKGROUND**

A high frequency technology in Release 17 (R17) supports one Downlink Control Information (DCI) schedules multiple Physical downlink shared channels (PDSCH), and also supports transmission of a two-codeword transport block (TB). Meanwhile, in order to reduce a feedback overhead for Hybrid Automatic Repeat Request Acknowledgement (HARQ-ACK), it is also expected that the R17 will support that a bundling method is used for HARQ-ACK feedback for the PDSCHs.
However, in case of scheduling multi-PDSCH transmission, there is no feasible technical solution for how to obtain HARQ-ACK information.

**SUMMARY**

The embodiment of the present disclosure provide a Hybrid Automatic Repeat request (HARQ) acknowledgement (ACK) feedback method, a HARQ-ACK feedback device and a terminal device, to solve the problem that reliability of network communication cannot be guaranteed because there is no clear technical solution under the condition of scheduling multi-PDSCH transmission.
In order to address the above technical problem, the embodiments of the present disclosure provide a HARQ-ACK feedback method performed by a terminal device. The method includes

determining at least one scheduling state of at least one type of transport blocks corresponding to multiple physical downlink shared channels (PDSCHs) scheduled by first downlink control information (DCI), wherein the at least one scheduling state includes an enabled state or a disabled state;
generating HARQ-ACK information for the multiple PDSCHs according to the at least one scheduling state of the at least one type of transport blocks corresponding to the multiple PDSCHs scheduled by the first DCI and bundling configuration information for PDSCH feedback;
wherein any type of transport blocks of the at least one type of transport blocks are transport blocks, having the same identifier, in the multiple PDSCHs scheduled by the first DCI.

Optionally, determining the at least one scheduling state of the at least one type of transport blocks corresponding to the multiple PDSCHs scheduled by the first DCI includes:

obtaining a scheduling state judgment manner;
determining the at least one scheduling state of the at least one type of transport blocks corresponding to the multiple PDSCHs scheduled by the first DCI according to the scheduling state judgment manner;
wherein scheduling state judgment manner includes any one of the following:

determining a scheduling state of each type of transport blocks corresponding to each PDSCH the multiple PDSCHs scheduled by the first DCI, in one-time judgment;
judging a scheduling state of each type of transport blocks corresponding to each PDSCH the multiple PDSCHs scheduled by the first DCI, independently.

Optionally, obtaining the scheduling state judgment manner includes at least one of following:

obtaining the scheduling state judgment manner indicated by a network device;
obtaining the scheduling state judgment manner agreed by a protocol;

determining the scheduling state judgment manner, according to a scheduling state judgment capability supported by the terminal device.

Optionally, in case of obtaining the scheduling state judgment manner indicated by the network device or determining the scheduling state judgment manner according to the scheduling state judgment capability supported by the terminal device, the method further includes:

sending terminal capability information to the network device;
wherein, the terminal capability information includes a scheduling state judgment manner supported by the terminal device.

Optionally, when the scheduling state judgment manner is to determine the scheduling state of each type of transport blocks corresponding to the multiple PDSCHs scheduled by the first DCI in one-time judgment, determining the at least one scheduling state of at least one type of transport blocks corresponding to the multiple PDSCHs scheduled by the first DCI includes:

when the network device indicates that multi-codeword transmission is supported, determining a scheduling state of a first type of target transport blocks corresponding to the multiple PDSCHs scheduled by the first DCI, according to field information, corresponding to the first type of target transport blocks, in an information field of the first DCI;
wherein the first type of target transport blocks is any type of transport blocks in transport blocks indicated by the information field of the first DCI.

Optionally, determining the scheduling state of the first type of target transport blocks corresponding to the multiple PDSCHs scheduled by the first DCI, according to field information, corresponding to the first type of target transport blocks, in the information field of the first DCI includes:

determining that the scheduling state of the first type of target transport blocks corresponding to the multiple PDSCHs scheduled by the first DCI is a disabled state when the field information corresponding to the first type of target transport blocks in the information field of the first DCI meets a first condition; or
determining that the scheduling state of the first type of target transport blocks corresponding to the multiple PDSCHs scheduled by the first DCI is an enabled state, when the field information corresponding to the first type of target transport blocks in the information field of the first DCI does not meet a first condition;
wherein the first condition includes at least one of following:

a value of indication of a Modulation and Coding Scheme (MCS) is a first preset value;
values of part or all of bits in Redundancy Version (RV) indication are second preset values;
a value of a New Data Indicator (NDI) is a third preset value.

Optionally, when the scheduling state judgment manner is to judge the scheduling state of each type of transport blocks corresponding to the multiple PDSCHs scheduled by the first DCI, independently, determining the at least one scheduling state of at least one type of transport blocks corresponding to the multiple PDSCHs scheduled by the first DCI includes:

determining a scheduling state of a second type of target transport blocks corresponding to a first PDSCH according to field information of the corresponding second type of target transport blocks in an information field of the first DCI, when the network device indicates that multi-codeword transmission is supported;
wherein the first PDSCH is any PDSCH of the multiple PDSCHs scheduled by the first DCI, and the second type of target transport blocks is any type of transport blocks of transport blocks indicated in the information field of the first DCI.

Optionally, determining the scheduling state of the second type of target transport blocks corresponding to the first PDSCH according to the field information of the corresponding second type of target transport blocks in the information field of the first DCI includes:

determining that the scheduling state of the second type of target transport blocks corresponding to the first PDSCH is a disabled state, when the field information corresponding to the second type of target transport blocks in the information field of the first DCI meets a second condition; or
determining that the scheduling state of the second type of target transport blocks corresponding to the first PDSCH is an enabled state, when the field information corresponding to the second type of target transport blocks in the information field of the first DCI does not meet the second condition;

wherein the second condition includes at least one of following:

a value of bits, corresponding to the first PDSCH, in indication of Modulation and Coding Scheme (MCS) is a fourth preset value;

a value of a bit, corresponding to the first PDSCH, in indication of a Redundancy Version (RV) is a fifth preset value;

a value of a bit, corresponding to the first PDSCH, in a New Data Indicator (NDI) is a sixth preset value.

Optionally, after determining the at least one scheduling state of the at least one type of transport blocks corresponding to the multiple PDSCHs scheduled by the first DCI, the method further includes any one of following:

determining that the network device does not send transport blocks when scheduling states of all corresponding transport blocks in an information field of the first DCI are determined to be a disabled state;

determining that the scheduling states of a third type of target transport blocks corresponding to a second PDSCH are a disabled state when scheduling states of all transport blocks corresponding to the second PDSCH in an information field of the first DCI are determined to be a disabled state,

wherein the second PDSCH is any PDSCH scheduled by the first DCI, the third type of target transport blocks is at least one transport block of transport blocks indicated in the information field of the first DCI.

Optionally, when bundling configuration information is that there is no bundling of feedback information of different types of transport blocks corresponding to the same PDSCH, and there is no bundling of feedback information of different PDSCHs, generating HARQ-ACK information for the multiple PDSCHs according to the at least one scheduling state of the at least one type of transport blocks corresponding to the multiple PDSCHs scheduled by the first DCI and bundling configuration information for PDSCH feedback includes at least one of the following:

if codeword transmission is not configured or single-codeword transmission is configured, then configuring, to a seventh preset value, a value of a first feedback bit corresponding to a PDSCH not being scheduled, configuring, according to a decoding result, a bit value of a second feedback bit corresponding to a PDSCH being scheduled, and generating the HARQ-ACK information according to the first feedback bit and the second feedback bit;

if multi-codeword transmission is configured, configuring, to an eighth preset value, a value of a third feedback bit of a Transport Block (TB) corresponding to a PDSCH not being scheduled, configuring, to the eighth preset value, a value of a fourth feedback bit corresponding to a transport block in a disabled state corresponding to a PDSCH being scheduled; configuring, according to a decoding result, a bit value of a fifth feedback bit corresponding to a transport block in an enabled state corresponding to the PDSCH being scheduled, and generating the HARQ-ACK information according to the third feedback bit, the fourth feedback bit and the fifth feedback bit.

Optionally, generating the HARQ-ACK information according to the third feedback bit, the fourth feedback bit and the fifth feedback bit includes:

sequencing the third feedback bit, the fourth feedback bit and the fifth feedback bit in a preset manner to generate the HARQ-ACK information;

wherein the preset manner includes any one of the following:

sequencing the third feedback bit, the fourth feedback bit and the fifth feedback bit according to a rule of codewords being in an ascending order first and then PDSCHs being in an ascending order;

sequencing the third feedback bit, the fourth feedback bit and the fifth feedback bit according to a rule of PDSCHs being in an ascending order first and then codewords being in an ascending order.

Optionally, when the bundling configuration information is that there is bundling of feedback information of different types of transport blocks corresponding to the same PDSCH and there is no bundling of feedback information of different PDSCHs, or there is bundling of feedback information of different types of transport blocks corresponding to the same PDSCH and there is bundling of feedback information of different PDSCHs, generating the HARQ-ACK information for the multiple PDSCHs according to the at least one scheduling state of the at least one type of transport blocks corresponding to the multiple PDSCHs scheduled by the first DCI and bundling configuration information for PDSCH feedback includes:

determining a value of a sixth feedback bit corresponding to at least one type of transport blocks corresponding to each PDSCH when configuring multi-codeword transmission;

determining a value of a seventh feedback bit corresponding to each PDSCH according to the value of the sixth feedback bit corresponding to at least one type of transport blocks corresponding to each PDSCH;

generating the HARQ-ACK information for the multiple PDSCHs according to the seventh feedback bit corresponding to each PDSCH.

Optionally, determining the value of the sixth feedback bit corresponding to at least one type of transport blocks corresponding to each PDSCH includes at least one of following:

when a third PDSCH needs to transmit at least one type of transport blocks, setting, to a ninth preset value, the value of the sixth feedback bit of the transport block not transmitted;

when a fourth PDSCH needs to transmit at least one type of transport blocks and all the transport blocks corresponding to the fourth PDSCH are not transmitted, setting, to a tenth preset value, the values of the sixth feedback bits of all the transport blocks corresponding to the fourth PDSCH;

setting, according to a decoding result, a bit value of the sixth feedback bit of a transport block scheduled for transmission corresponding to a fifth PDSCH;

setting the sixth feedback bit corresponding to the transport block in the disable state to an eleventh preset value;

for a sixth PDSCH which is not scheduled or which is invalidly scheduled, setting a sixth feedback bit of a transport block corresponding to the sixth PDSCH to a twelfth preset value.

Optionally, generating the HARQ-ACK information for the multiple PDSCHs according to the seventh feedback bit corresponding to each PDSCH includes:

generating the HARQ-ACK information for the multiple PDSCHs according to the seventh feedback bit corresponding to the scheduled PDSCH or the valid PDSCH.

Optionally, when the bundling configuration information is that there is no bundling of feedback information of different types of transport blocks corresponding to the same PDSCH and there is bundling of feedback information of different PDSCHs, generating the HARQ-ACK information for the multiple PDSCHs according to the at least one scheduling state of the at least one type of transport blocks corresponding to the multiple PDSCHs scheduled by the first DCI and bundling configuration information for PDSCH feedback includes:

determining a quantity of PDSCHs scheduled by the first DCI or valid PDSCHs, when single-codeword transmission is configured or no codeword transmission is configured;

grouping PDSCHs scheduled by the first DCI or valid PDSCHs;

bundling decoding results of PDSCHs in each group after grouping, to obtain an eighth feedback bit;

generating the HARQ-ACK information according to the eighth feedback bit corresponding to each group of PDSCHs.

Optionally, grouping the PDSCHs scheduled by the first DCI or the valid PDSCHs includes at least one of the following:

if X is less than or equal to N, determining that Y is equal to X, and each group corresponds to one PDSCH;

if X is greater than N, determining that Y is equal to N, and determining the number of PDSCHs corresponding to each group in a first manner;

wherein, X is a quantity of valid PDSCHs or scheduled PDSCHs, Y is a quantity of groups, N is a quantity of bits of the HARQ-ACK information to be fed back, and both X and Y are integers greater than or equal to 1;

wherein the first manner includes one of the following:

each bit of first (X mod N) bits in the HARQ-ACK information corresponds to a bundling result of decoding results of $\lfloor X/N \rfloor + 1$ PDSCHs, each bit of last N- (X mod N) bits in the HARQ-ACK information corresponds to a bundling result of decoding results of $\lfloor X/N \rfloor$ PDSCHs;

each bit of last (X mod N) bits in the HARQ-ACK information corresponds to a bundling result of decoding results of $\lfloor X/N \rfloor + 1$ PDSCHs; each bit of first N-(X mod N) bits in the HARQ-ACK information corresponds to a bundling result of decoding results of $\lfloor X/N \rfloor$ PDSCHs;

wherein 'Mod' represents finding a remainder, and $\lfloor X/N \rfloor$ represents rounding down X/N.

Optionally, determining the quantity of PDSCHs scheduled by the first DCI or the valid PDSCHs includes: determining the quantity of PDSCHs scheduled by the first DCI or the valid PDSCHs according to a quantity of PDSCHs actually scheduled, the quantity of PDSCHs actually scheduled being obtained in a time-domain scheduling information table indicated by the first DCI.

Optionally, when the bundling configuration information is that there is no bundling of feedback information of different types of transport blocks corresponding to the same PDSCH and there is bundling of feedback information of different PDSCH, generating the HARQ-ACK information for the multiple PDSCHs according to the at least one scheduling state of the at least one type of transport blocks corresponding to the multiple PDSCHs scheduled by the first DCI and bundling configuration information for PDSCH feedback includes:

determining a quantity of transport blocks included in each type of transport blocks, involved in bundling calculation, in the PDSCHs scheduled by the first DCI, when multi-codeword transmission is configured;
generating the HARQ-ACK information for the multiple PDSCHs according to the quantity of transport blocks included in each type of transport blocks, involved in bundling calculation, in the PDSCHs scheduled by the first DCI and a corresponding decoding result.

Optionally, determining the quantity of transport blocks included in each type of transport blocks, involved in bundling calculation, in the PDSCHs scheduled by the first DCI when multi-codeword transmission is configured includes at least one of following:

determining the quantity of transport blocks included in each type of transport blocks according to a quantity of actually scheduled PDSCHs or valid PDSCHs and scheduling states of the transport blocks;
uniformly calculating a quantity of transport blocks included in each type of transport blocks according to a quantity of actually scheduled PDSCHs or valid PDSCHs and the scheduling states of the transport blocks, wherein the quantities of transport blocks included in different types of transport blocks are the same.

Optionally, generating the HARQ-ACK information for the multiple PDSCHs according to the quantity of transport blocks included in each type of transport blocks, involved in bundling calculation, in the PDSCHs scheduled by the first DCI and the corresponding decoding result includes at least one of the following:

according to the quantity of transport blocks included in each type of transport blocks and the corresponding decoding result, bundling decoding results of each type of transport blocks to generate a bit sequence corresponding to each type of transport block;
adding up the quantities of transport blocks included in different types of transport blocks, and according to the quantity of all transport blocks after the adding, bundling the decoding results of all transport blocks to generate multiple feedback bits.

Optionally, generating the HARQ-ACK information for the multiple PDSCHs includes any one of following:

generating the HARQ-ACK information for the multiple PDSCHs by sequencing the feedback bits according to a rule of codewords being in an ascending order first and then PDSCHs being in an ascending order;
generating the HARQ-ACK information for the multiple PDSCHs by sequencing the feedback bits according to a rule of PDSCHs being in an ascending order first and then codewords being in an ascending order.

The embodiments of the present disclosure further provide a terminal device. The terminal device includes a memory, a transceiver, and a processor, the memory is configured to store a computer program, the transceiver is configured to send and/or receive data under control of the processor, and the processor is configured to read the computer program in the memory to implement following:

determining at least one scheduling state of at least one type of transport blocks corresponding to multiple physical downlink shared channels (PDSCHs) scheduled by first downlink control information (DCI), wherein the at least one scheduling state includes an enabled state or a disabled state;
generating Hybrid Automatic Repeat reQuest acknowledgement (HARQ-ACK) information of the multiple PDSCHs according to the at least one scheduling state of the at least one type of transport blocks corresponding to the multiple PDSCHs scheduled by the first DCI and bundling configuration information for PDSCH feedback; wherein any type of transport blocks of the at least one type of transport blocks are transport blocks, having the same identifier, in the multiple PDSCHs scheduled by the first DCI.

Optionally, the processor is configured to read the computer program in the memory to implement following:

obtaining a scheduling state judgment manner; determining the at least one scheduling state of the at least one type of transport blocks corresponding to the multiple PDSCHs scheduled by the first DCI according to the scheduling state judgment manner; wherein scheduling state judgment manner includes any one of the following:

determining a scheduling state of each type of transport blocks corresponding to each PDSCH of the multiple PDSCHs scheduled by the first DCI, in one-time judgment; judging a scheduling state of each type of transport blocks corresponding to each PDSCH the multiple PDSCHs scheduled by the first DCI, independently.

Optionally, the processor is configured to read the computer program in the memory to implement at least one of following:

obtaining the scheduling state judgment manner indicated by a network device; obtaining the scheduling state judgment manner agreed by a protocol; determining the scheduling state judgment manner, according to a scheduling state judgment capability supported by the terminal device.

Optionally, in case of obtaining the scheduling state judgment manner indicated by the network device or determining the scheduling state judgment manner according to the scheduling state judgment capability supported by the terminal device, the processor is configured to read the computer program in the memory to further implement following:

sending terminal capability information to the network device through the transceiver; wherein, the terminal capability information includes a scheduling state judgment manner supported by the terminal device.

Optionally, when the scheduling state judgment manner is to determine the scheduling state of each type of transport blocks corresponding to the multiple PDSCHs scheduled by the first DCI in one-time judgment, the processor is configured to read the computer program in the memory to implement following:

when the network device indicates that multi-codeword transmission is supported, determining a scheduling state of a first type of target transport blocks corresponding to the multiple PDSCHs scheduled by the first DCI, according to field information, corresponding to the first type of target transport blocks, in an information field of the first DCI; wherein the first type of target transport blocks is any type of transport blocks in transport blocks indicated by the information field of the first DCI.

Optionally, the processor is configured to read the computer program in the memory to implement following:

determining that the scheduling state of the first type of target transport blocks corresponding to the multiple PDSCHs scheduled by the first DCI is a disabled state when the field information corresponding to the first type of target transport blocks in the information field of the first DCI meets a first condition; or determining that the scheduling state of the first type of target transport blocks corresponding to the multiple PDSCHs scheduled by the first DCI is an enabled state, when the field information corresponding to the first type of target transport blocks in the information field of the first DCI does not meet a first condition; wherein the first condition includes at least one of following:

a value of indication of a Modulation and Coding Scheme (MCS) is a first preset value; values of part or all of bits in Redundancy Version (RV) indication are second preset values; a value of a New Data Indicator (NDI) is a third preset value.

Optionally, when the scheduling state judgment manner is to judge the scheduling state of each type of transport blocks corresponding to the multiple PDSCHs scheduled by the first DCI, independently, the processor is configured to read the computer program in the memory to implement following:

determining a scheduling state of a second type of target transport blocks corresponding to a first PDSCH according to field information of the corresponding second type of target transport blocks in an information field of the first DCI, when the network device indicates that multi-codeword transmission is supported;
wherein the first PDSCH is any PDSCH of the multiple PDSCHs scheduled by the first DCI, and the second type of target transport blocks is any type of transport blocks of transport blocks indicated in the information field of the first DCI.

Optionally, the processor is configured to read the computer program in the memory to implement following:

determining that the scheduling state of the second type of target transport blocks corresponding to the first PDSCH is a disabled state, when the field information corresponding to the second type of target transport blocks in the information field of the first DCI meets a second condition; or
determining that the scheduling state of the second type of target transport blocks corresponding to the first PDSCH is an enabled state, when the field information corresponding to the second type of target transport blocks in the information field of the first DCI does not meet the second condition;
wherein the second condition includes at least one of following:

a value of bits, corresponding to the first PDSCH, in indication of Modulation and Coding Scheme (MCS) is a fourth preset value;
a value of a bit, corresponding to the first PDSCH, in indication of a Redundancy Version (RV) is a fifth preset value;
a value of a bit, corresponding to the first PDSCH, in a New Data Indicator (NDI) is a sixth preset value.

Optionally, the processor is configured to read the computer program in the memory to further implement any one of following:

determining that the network device does not send transport blocks when scheduling states of all corresponding transport blocks in an information field of the first DCI are determined to be a disabled state;
determining that the scheduling states of a third type of target transport blocks corresponding to a second PDSCH are a disabled state when scheduling states of all transport blocks corresponding to the second PDSCH in an information field of the first DCI are determined to be a disabled state,
wherein the second PDSCH is any PDSCH scheduled by the first DCI, the third type of target transport blocks is at least one transport block of transport blocks indicated in the information field of the first DCI.

Optionally, when the bundling configuration information is that there is no bundling of feedback information of different types of transport blocks corresponding to the same PDSCH, and there is no bundling of feedback information of different PDSCHs, the processor is configured to read the computer program in the memory to further implement at least one of following::

if codeword transmission is not configured or single-codeword transmission is configured, then configuring, to a seventh preset value, a value of a first feedback bit corresponding to a PDSCH not being scheduled, configuring, according to a decoding result, a bit value of a second feedback bit corresponding to a PDSCH being scheduled, and generating the HARQ-ACK information according to the first feedback bit and the second feedback bit;
if multi-codeword transmission is configured, configuring, to an eighth preset value, a value of a third feedback bit of a Transport Block (TB) corresponding to a PDSCH not being scheduled, configuring, to the eighth preset value, a value of a fourth feedback bit corresponding to a transport block in a disabled state corresponding to a PDSCH being scheduled; configuring, according to a decoding result, a bit value of a fifth feedback bit corresponding to a transport block in an enabled state corresponding to the PDSCH being scheduled, and generating the HARQ-ACK information according to the third feedback bit, the fourth feedback bit and the fifth feedback bit.

Optionally, the processor is configured to read the computer program in the memory to implement following:

sequencing the third feedback bit, the fourth feedback bit and the fifth feedback bit in a preset manner to generate the HARQ-ACK information;
wherein the preset manner includes any one of the following:

sequencing the third feedback bit, the fourth feedback bit and the fifth feedback bit according to a rule of codewords being in an ascending order first and then PDSCHs being in an ascending order;
sequencing the third feedback bit, the fourth feedback bit and the fifth feedback bit according to a rule of PDSCHs being in an ascending order first and then codewords being in an ascending order.

Optionally, when the bundling configuration information is that there is bundling of feedback information of different types of transport blocks corresponding to the same PDSCH and there is no bundling of feedback information of different PDSCHs, or there is bundling of feedback information of different types of transport blocks corresponding to the same PDSCH and there is bundling of feedback information of different PDSCHs, the processor is configured to read the computer program in the memory to implement following:

determining a value of a sixth feedback bit corresponding to at least one type of transport blocks corresponding to each PDSCH when configuring multi-codeword transmission;
determining a value of a seventh feedback bit corresponding to each PDSCH according to the value of the sixth feedback bit corresponding to at least one type of transport blocks corresponding to each PDSCH;
generating the HARQ-ACK information for the multiple PDSCHs according to the seventh feedback bit corresponding to each PDSCH.

Optionally, the processor is configured to read the computer program in the memory to implement at least one of following:

when a third PDSCH needs to transmit at least one type of transport blocks, setting, to a ninth preset value, the value of the sixth feedback bit of the transport block not transmitted;
when a fourth PDSCH needs to transmit at least one type of transport blocks and all the transport blocks corresponding to the fourth PDSCH are not transmitted, setting, to a tenth preset value, the values of the sixth feedback bits of all the transport blocks corresponding to the fourth PDSCH;
setting, according to a decoding result, a bit value of the sixth feedback bit of a transport block scheduled for transmission corresponding to a fifth PDSCH;
setting the sixth feedback bit corresponding to the transport block in the disable state to an eleventh preset value;
for a sixth PDSCH which is not scheduled or which is invalidly scheduled, setting a sixth feedback bit of a transport block corresponding to the sixth PDSCH to a twelfth preset value.

Optionally, the processor is configured to read the computer program in the memory to implement following:
generating the HARQ-ACK information for the multiple PDSCHs according to the seventh feedback bit corresponding to the scheduled PDSCH or the valid PDSCH.

Optionally, when the bundling configuration information is that there is no bundling of feedback information of different types of transport blocks corresponding to the same PDSCH and there is bundling of feedback information of different PDSCHs, the processor is configured to read the computer program in the memory to implement following:

determining a quantity of PDSCHs scheduled by the first DCI or valid PDSCHs, when single-codeword transmission is configured or no codeword transmission is configured;
grouping PDSCHs scheduled by the first DCI or valid PDSCHs;
bundling decoding results of PDSCHs in each group after grouping, to obtain an eighth feedback bit;
generating the HARQ-ACK information according to the eighth feedback bit corresponding to each group of PDSCHs.

Optionally, the processor is configured to read the computer program in the memory to implement at least one of following:

if X is less than or equal to N, determining that Y is equal to X, and each group corresponds to one PDSCH;
if X is greater than N, determining that Y is equal to N, and determining the number of PDSCHs corresponding to each group in a first manner;
wherein, X is a quantity of valid PDSCHs or scheduled PDSCHs, Y is a quantity of groups, N is a quantity of bits of the HARQ-ACK information to be fed back, and both X and Y are integers greater than or equal to 1;
wherein the first manner includes one of the following:

each bit of the first (X mod N) bits in the HARQ-ACK information corresponds to a bundling result of decoding results of $\lfloor X/N \rfloor +1$ PDSCHs, each bit of the last N- (X mod N) bits in the HARQ-ACK information corresponds to a bundling result of decoding results of $\lfloor X/N \rfloor$ PDSCHs;

each of the last (X mod N) bits in the HARQ-ACK information corresponds to a bundling result of decoding results of $\lfloor X/N \rfloor + 1$ PDSCHs; each bit of the first N-(X mod N) bits in the HARQ-ACK information corresponds to a bundling result of decoding results of $\lfloor X/N \rfloor$ PDSCHs;

wherein 'Mod' represents finding a remainder, and $\lfloor X/N \rfloor$ represents rounding down X/N.

Optionally, the processor is configured to read the computer program in the memory to implement following: determining the quantity of PDSCHs scheduled by the first DCI or valid PDSCHs according to a quantity of PDSCHs actually scheduled, the quantity of PDSCHs actually scheduled being obtained in a time-domain scheduling information table indicated by the first DCI.

Optionally, when the bundling configuration information is that there is no bundling of feedback information of different types of transport blocks corresponding to the same PDSCH and there is bundling of feedback information of different PDSCH, the processor is configured to read the computer program in the memory to implement following:

determining a quantity of transport blocks included in each type of transport blocks, involved in bundling calculation, in the PDSCHs scheduled by the first DCI, when multi-codeword transmission is configured;
generating the HARQ-ACK information for the multiple PDSCHs according to the quantity of transport blocks included in each type of transport blocks, involved in bundling calculation, in the PDSCHs scheduled by the first DCI and a corresponding decoding result.

Optionally, the processor is configured to read the computer program in the memory to implement at least one of following:

determining the quantity of transport blocks included in each type of transport blocks according to a quantity of actually scheduled PDSCHs or valid PDSCHs and scheduling states of the transport blocks;
uniformly calculating a quantity of transport blocks included in each type of transport blocks according to a quantity of actually scheduled PDSCHs or valid PDSCHs and the scheduling states of the transport blocks, wherein the quantities of transport blocks included in different types of transport blocks are the same.

Optionally, the processor is configured to read the computer program in the memory to implement at least one of following:

according to the quantity of transport blocks included in each type of transport blocks and the corresponding decoding result, bundling decoding results of each type of transport blocks to generate a bit sequence corresponding to each type of transport block;
adding up the quantities of transport blocks included in different types of transport blocks, and according to the quantity of all transport blocks after the adding, bundling the decoding results of all transport blocks to generate multiple feedback bits.

Optionally, the processor is configured to read the computer program in the memory to implement any one of following:

generating the HARQ-ACK information for the multiple PDSCHs by sequencing the feedback bits according to a rule of codewords being in an ascending order first and then PDSCHs being in an ascending order;
generating the HARQ-ACK information for the multiple PDSCHs by sequencing the feedback bits according to a rule of PDSCHs being in an ascending order first and then codewords being in an ascending order.

The embodiments of the present disclosure further provide a HARQ-ACK feedback apparatus which is applied to a terminal device. The apparatus includes:

a first determining unit, configured for determining at least one scheduling state of at least one type of transport blocks corresponding to multiple physical downlink shared channels (PDSCHs) scheduled by first downlink control information (DCI), wherein the at least one scheduling state includes an enabled state or a disabled state;
a generating unit, configured for generating HARQ-ACK information for the multiple PDSCHs according to the at least one scheduling state of the at least one type of transport blocks corresponding to the multiple PDSCHs scheduled by the first DCI and bundling configuration information for PDSCH feedback;
wherein any type of transport blocks of the at least one type of transport blocks are transport blocks, having the same identifier, in the multiple PDSCHs scheduled by the first DCI.

The embodiments of the present disclosure further provide a processor-readable storage medium. The processor-readable storage medium stores a computer program, wherein when the computer program is executed by a processor, the processor implements the method described above.

Beneficial effects of the present disclosure are:
by using the above technical solutions, the HARQ-ACK information is obtained by first determining the scheduling states of the transport blocks of PDSCHs scheduled by the DCI, and then according to the scheduling states of the transport blocks and the bundling configuration information for the PDSCH feedback. Therefore, the technical solution of obtaining the HARQ-ACK information in the case of scheduling multi-PDSCH transmission is improved, and the reliability of network communication is ensured.

## BRIEF DESCRIPTION OF THE DRAWINGS

In order to more clearly explain technical solutions in embodiments of the present disclosure or the related art, drawings that need to be used in description of the embodiments or the related art will be briefly introduced below. Obviously, the drawings in the following description are only some of the embodiments described in the present disclosure, and other drawings may be obtained from these drawings without paying any creative labor by those skilled in the art.

Fig. 1 shows a structural diagram of a network system suitable for some embodiments of the present disclosure;
Fig. 2 is a flowchart of a hybrid automatic repeat request acknowledgement feedback method according to some embodiments of the present disclosure;
Fig. 3 shows a schematic diagram of feedback bits of each TB corresponding to each PDSCH;
Fig. 4 shows a schematic diagram of PDSCH group bundling;
Fig. 5 is a schematic diagram of a scheduling state of a TB corresponding to each PDSCH;
Fig. 6 shows a schematic diagram of a scheduling state of each TB and TB group bundling;
Fig. 7 shows a block diagram of a hybrid automatic repeat request acknowledgement feedback device according to some embodiments of the present disclosure;
Fig. 8 shows a structural diagram of a terminal device according to some embodiments of the present disclosure.

## DETAILED DESCRIPTION

The technical solutions in the embodiments of the present disclosure will be clearly and completely described below with reference to the drawings in the embodiments of the present disclosure. Obviously, the described embodiments are part of the embodiments of the present disclosure, not all of the embodiments. Based on the embodiments in the present disclosure, all other embodiments obtained by those skilled in the art without paying creative work belong to the protection scope of the present disclosure.

Such terms as "first," "second," etc. in the specification and claims of the present disclosure are used to distinguish similar objects, but are not necessarily used to describe a particular order or order of precedence. It should be understood that the terms used in this way may be interchanged where appropriate so that the embodiments of the present disclosure described herein may be implemented in an order other than those illustrated or described herein. Furthermore, such terms as "including" and "having," and any variations thereof, are intended to cover non-exclusive inclusion, for example, a process, method, system, product or device including a series of steps or units need not be limited to those steps or units that are clearly listed, but may include other steps or elements that are not explicitly listed or inherent to the process, method, product or device.

In some embodiments of the present disclosure, a term "and/or" describes an association relationship of connected objects, meaning that there can be three relationship, for example, A and/or B can mean three cases in which A exists alone, A and B exist simultaneously, and B exists alone. Such character '/' generally indicates that objects connected by this character is an "OR" relationship. In the embodiments of the present disclosure, terms "multiple" or "a plurality of" refer to two or more, and other quantifiers are similar.

In the embodiments of the present disclosure, such words as "exemplary" or "such as" are used to denote examples, illustrations, or descriptions. Any embodiment or design that is described as "exemplary" or "such as" in the embodiments of the present disclosure should not be construed as being more preferred or advantageous than other embodiments or designs. Rather, use of the words "exemplary" or "such as" is intended to present related concepts in a specific manner.

Embodiments of the present disclosure are described below with reference to the drawings. The hybrid automatic repeat request acknowledgement feedback method, the hybrid automatic repeat request acknowledgement feedback method device and a terminal device provided in the embodiments of the present disclosure can be applied to a wireless communication system. The wireless communication system may be a system adopting the fifth generation (5th Generation, 5G) mobile communication technology (hereinafter referred to simply as a 5G system), and those skilled in the art can understand that the 5G NR system is merely an example and not a limitation.

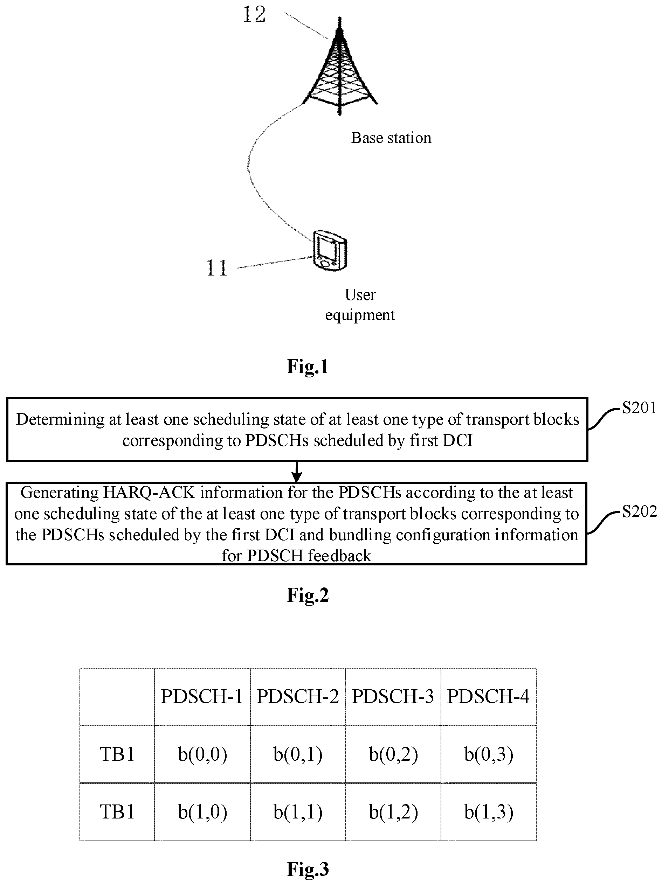

Referring to Fig. 1, Fig. 1 is a structural diagram of a network system applicable to some embodiments of the present disclosure. As shown in Fig. 1, the network system includes a user terminal 11 and a base station 12, wherein the user terminal 11 may be a User Equipment (UE), for example a terminal-side device, such as a mobile phone, a Tablet Personal Computer, a Laptop Computer, a personal digital assistant (PDA), a Mobile Internet Device (MID), or a Wearable Device. It should be noted that the user terminal 11 in the embodiments of the present disclosure is not limited to a specific type. The above-mentioned base station 12 may be a base station of Fifth Generation (5G) mobile communications and later versions (for example, gNB, 5G NR NB), or a base station in other communication systems, or is called Node B. It should be noted that, in the embodiments of the present disclosure, only a 5G base station is taken as an example, but the base station 12 is not limited to a specific type.

Some concepts related to the embodiments of the present disclosure are first described below.

First, a Hybrid Automatic Repeat Request acknowledgement (HARQ-ACK) dynamic codebook (type-2) mechanism based on a Physical downlink shared channel (PDSCH) scheduling.

An 5G system in the related artsupports a mechanism of generating a dynamic HARQ-ACK codebook, a principle of which is that a DownLink Assignment Index (DAI) indication is added when a scheduling signaling (Downlink control information, DCI) is sent. A terminal side calculates, according to counts in the DAI, the number of DCIs and PDSCHs actually transmitted by the base station, thereby determining the number, included in the HARQ-ACK codebook, of PDSCHs needing to be fed back.

A process is described below in a single carrier scenario (with Counter Downlink Assignment Index (C-DAI) only).

It is assumed that the base station transmits 9 DCIs scheduling PDSCHs, i.e., DCI-1 to DCI-9, respectively. A bit width of counting in DAI is 2 bits, i.e., a maximum counting range is $T_D = 4$. j is the number of cycles used by the terminal side to calculate a DAI value (j is added by 1 when a case that the DAI in the current DCI is less than or equal to the DAI in the previous DCI occurs).

According to the current DAI counting mechanism, the terminal may calculate the number of DCIs sent by the base station, and a calculation method is as follows:

$$V_{\mathrm{DAI},m_{\mathrm{last}}}^{\mathrm{DL}} + T_D * j$$

where $V_{\mathrm{DAI},m_{\mathrm{last}}}^{\mathrm{DL}}$ is a DAI value in the last DCI (in DCI-9, DAI = 1), that is, the number of scheduled DCIs is 1+4*2=9. The terminal further calculates, according to the number of scheduled DCIs, the number of transport blocks feeding back the HARQ-ACK, and corresponding number $O_{\mathrm{ACK}}$ of bits of a HARQ codebook.

When the base station schedules codebook feedback which supports a multicast, the number $O_{\mathrm{ACK}}$ of bits of the HARQ-ACK codebook fed back on a Physical uplink control channel (PUCCH) by the terminal is equal to the sum of the number of bits of a unicast HARQ sub-codebook and the number of bits of a multicast HARQ sub-codebook. For example, $O_{\mathrm{ACK}} = O_{\mathrm{ACK}}(unicast) + \sum_{i=0}^{N-1} O_{\mathrm{ACK(G\text{-}RNIT(I))}}$ . Here, $O_{\mathrm{ACK}}(unicast)$ is the length of a unicast HARQ-ACK sub-codebook, $O_{\mathrm{ACK(G\text{-}RNIT(I))}}$ is the length of a sub-codebook corresponding to G-RNTI (i), N is the length of the HARQ-ACK codebook configured by the base station to be fed back on the PUCCH.

Second, multi-codeword transmission based on single PDSCH scheduling

When scheduling data in a physical layer, one PDSCH can correspond to one codeword (single codeword) or two codewords (double codewords), which is briefly described below:

Single codeword: for one PDSCH, if one codeword (also called single codeword) is transmitted, then one PDSCH transmits a transport block (TB) (a Cyclic Redundancy Check (CRC) check is performed separately, and a HARQ-ACK needs to be fed back), that is, when feeding back the HARQ-ACK, one HARQ-ACK information is generated, this TB can be described as a first TB (TB 1).

Double codeword: for one PDSCH, if two codewords (also called double codewords) are transmitted, then one PDSCH transmits two transport blocks TBs (a CRC check to each of the TBs is performed independently and the HARQ-ACK to the TB is needed), that is, when feeding back the HARQ-ACK, two pieces of HARQ-ACK information are generated; a TB transmitted through a first codeword is called a first TB (TB1) and a TB transmitted through a second codeword is called a second TB (TB2).

Indication of single codeword/multi-codeword:

In a technical standard, when configuring a PDSCH, a parameter maxNrofCodeWordsScheduledByDCI indicates the maximum codeword that can be supported when scheduling the PDSCH;

when maxNrofCodeWordsScheduledByDCI=2, it means that two-codeword scheduling is supported;
when maxNrofCodeWordsScheduledByDCI=1 or is not configured, only one-codeword scheduling is supported.

It should be noted that, if maxNrofCodeWordsScheduledByDCI=2 is configured by the base station, then in an actual scheduling process, one PDSCH may transmit one transport block or two transport blocks, which is indicated in the scheduling signaling DCI (such as a modulation format MCS = 26 and a redundant version supporting RV=1 indicate that a corresponding TB is not transmitted, this is also called 'disable'). In this case, the standard thinks that the base station can only use MCS=26/RV=1 for indication of one TB, to support that one TB is not transmitted.

A bundling mechanism of HARQ-ACK feedback by two TBs:

When one PDSCH supports two-codeword transmission, two pieces of HARQ-ACK (Acknowledgement, ACK) information need to be fed back. In order to reduce the amount of HARQ-ACK information, the standard introduces the bundling mechanism, that is, bits of the two pieces of feedback HARQ-ACK information and operations form a feedback message, such as:

HARQ-ACK (TB1) = NACK (= 0), HARQ-ACK (TB2) = ACK (= 1), then the message after the bundling is "0" bit and " 1"=0;
HARQ-ACK (TB1) = ACK (= 1), HARQ-ACK (TB2) = ACK (= 1), then the message after the bundling is: "1" bit and "1" = 1;
although the bundling mechanism can reduce the overhead of feedback bits, its shortcomings lead to invalid retransmission by the base station. The reason is that as long as there is an error in decoding one TB (Negative Acknowledgement (NACK) is fed back), the terminal will feed back the NACK, resulting in that the base station may retransmit both TBs.

It should be noted that whether the terminal feeds back the HARQ-ACK information of two TBs by using the bundling mechanism depends on a configuration indication from the base station. If the base station configures harq-ACK-SpatialBundlingPUCCH, then it indicates that the base station needs to perform a bundling operation on the HARQ-ACK information of two TBs when the HARQ-ACK is fed back, otherwise, feedback is performed separately without performing a bundling operation.

In the existing standards, there is only a HARQ-ACK feedback mode for determination of enabling/disnabling transmission codewords and for bundling between codewords in a single-PDSCH scheduling scenario, and the technical solution corresponding to this scenario cannot be directly applied to multi-PDSCH transmission.

The embodiments of the present disclosure provide a hybrid automatic repeat request acknowledgement feedback method, a hybrid automatic repeat request acknowledgement feedback device and a terminal device, to solve the problem that reliability of network communication cannot be guaranteed because there is no clear technical solution under the condition of multi-PDSCH transmission scheduling.

The method and the device are based on the concept of the same application. Since the principles of solving problems by the method and the device are similar, implementation of the device and the method can be referred to each other, and the repeated description thereof will not be described again here.

As shown in Fig. 2, the embodiments of the present disclosure provide a hybrid automatic repeat request acknowledgement feedback method, which is executed by a terminal device, and includes steps S201-S202.

Step S201: determining a scheduling state of at least one type of transport blocks corresponding to multiple physical downlink shared channels (PDSCHs) scheduled by first downlink control information (DCI), wherein the scheduling state includes an enabled state or a disabled state.

It should be noted that "multiple" or "multiple" referred to in the embodiments of the present disclosure refers to two or more; the first DCI refers to any DCI transmitted by a network device, and any one type of transport blocks in the at least one type of transport blocks (or may also be referred to as a series of transport blocks, a group of transport blocks) include transport blocks having the same identifier corresponding to multiple PDSCHs scheduled by the first DCI. Because the TB corresponding to each PDSCH will have a TB identifier, for example, in a case where the first DCI schedules two types of transport blocks, each PDSCH corresponds to a TB identified as first-TB (also known as TB1) and a TB identified as second-TB (also known as TB2). All TBs identified as the first-TB corresponding to different PDSCHs are regarded as a type of TBs, the number of transport blocks contained in this type of transport blocks is 2 (that is, this type of transport blocks contains the same number of transport blocks as that of the PDSCHs scheduled by the DCI). All TBs identified as the second-TB corresponding to different PDSCHs are regarded as a type of TBs, and the number of transport blocks contained in this type of transport blocks is 2 (that is, this type of transport blocks contains the same number of transport blocks as that of the PDSCHs scheduled by the DCI).

Step S202: generating Hybrid Automatic Repeat Request Acknowledgement (HARQ-ACK) information of the multiple PDSCHs scheduled by the first DCI, according to the scheduling state of the at least one type of transport blocks corresponding to the multiple PDSCHs scheduled by the first DCI and bundling configuration information for PDSCH feedback.

Specific implementation of the above two steps is described in detail as follows.

Optionally, the specific implementation of the step S201 includes steps S2011-S2012.

Step S2011: obtaining a scheduling state judgment manner.

Specifically, the scheduling state judgment manner includes any one of the following:

A11, determining the scheduling state of each type of transport blocks corresponding to the multiple PDSCHs scheduled by the first DCI, in one-time judgment;

A12, judging the scheduling state of each type of transport blocks corresponding to the multiple PDSCHs scheduled by the first DCI, independently.

Optionally, the specific implementation of this step S2011 includes at least one of the following:

B11, obtaining the scheduling state judgment manner indicated by a network device; that is, in this case, the scheduling state judgment manner is indicated by the network device to the terminal device; optionally, in this case, the terminal device can also send terminal capability information to the network device, wherein the terminal capability information includes a scheduling state judgment manner supported by the terminal device; it should be explained here that this method is usually suitable for a case that the terminal device supports multiple scheduling state judgment manners, and the network device can select one of the multiple scheduling state judgment manners to be indicated to the terminal device, according to the terminal capability information reported by the terminal device;

B12, obtaining the scheduling state judgment manner agreed by a protocol; that is, in this case, the scheduling state judgment manner is agreed by the protocol, which is known by both the terminal device and the network device, and there is no need for interaction between the terminal device and the network device;

B13, determining a used scheduling state judgment manner, according to a scheduling state judgment capability supported by the terminal device; it should be noted that, in this case, the terminal device decides which scheduling state judgment manner to use by itself, for example, if the scheduling state judgment capability supported by the terminal device is that both A11 and A12 are supported, then the terminal device decides whether to use A11 or A12 by itself, or if the scheduling state judgment capability supported by the terminal device is that A11 or A12 is supported, then the terminal device directly determines that the manner A11 or A12 supported by the scheduling state judgment capability is used.

It should further be noted here that, this case is that the terminal device determines the scheduling state judgement manner by itself. Therefore, in order to enable the network device to also know the scheduling state judgment manner used by the terminal device, the terminal device should send the terminal capability information to the network device, and the terminal capability information includes the scheduling state judgment manner supported by the terminal device.

Step S2012: determining at least one scheduling state of at least one type of transport blocks corresponding to multiple PDSCHs scheduled by the first DCI according to the scheduling state judgment manner.

Specifically, in a case that the scheduling state judgment manner is A11, the specific implementation of this step may be: when the network device indicates that multi-codeword transmission is supported, determining a scheduling state of a first type of target transport blocks corresponding to each of the multiple PDSCHs scheduled by the first DCI, according to field information, corresponding to the first type of target transport blocks, in an information field of the first DCI; wherein the first type of target transport blocks is any type of transport blocks of the transport blocks indicated by the information field of the first DCI.

It should be noted that, in this case, the scheduling state of a type of transport blocks corresponding to each of the PDSCHs is directly determined according to the field information of the type of transport blocks, and optionally, according to the field information corresponding to the first type of target transport blocks in the information field of the first DCI, determining the scheduling state of the first type of target transport blocks corresponding to the multiple PDSCHs scheduled by the first DCI includes: in a case that the field information corresponding to the first type of target transport blocks in the information field of the first DCI meets a first condition, determining that the scheduling state of the first type of target transport blocks corresponding to each of the multiple PDSCHs scheduled by the first DCI is a disabled state; or in a case that the field information corresponding to the first type of target transport blocks in the information field of the first DCI does not meet a first condition, determining that the scheduling state of the first type of target transport blocks corresponding to each of the multiple PDSCHs scheduled by the first DCI is an enabled state.

The first condition includes at least one of the following:

C11, a value indicated by a modulation and coding scheme (MCS) is a first preset value; optionally, the first preset value may be 26;

C12, values of part or all of bits in a redundancy version (RV) indicator are second preset values; it should be noted that, when values of all bits are used, the terminal device determines the bits corresponding to the scheduled PDSCH and the bits corresponding to the unscheduled PDSCH in the RV indicator together; and when the values of part of the bits are used, the terminal device determines only the bits of the scheduled PDSCH in the RV indicator; optionally, the second preset value may be 1, that is, the values of part or all of the bits in the RV indicator are all 1;

C13, a value of a new data indicator (NDI) is a third preset value; it should be noted that the first preset value, the second preset value, and the third preset value may be configured by agreement in a protocol, by an indication from the network device, or by pre-configuration, or the like.

A case that the first condition includes both C11 and C12 is taken as an example, and the specific implementation is described as follows. When the network device (for example, the base station) indicates that 2-codeword transmisison is supported (for example, maxNrofCodeWordsScheduledByDCI = 2), the scheduling states of TB1 and/or TB2 are determined according to information of the DCI. It is assumed that the terminal device supports determining the scheduling states of TB1 and/or TB2 based on A11, and the specific implementation is that the MCS corresponding to a corresponding TB is a first preset value (for example, MCS = 26), and all RV fields corresponding to the corresponding TB are second preset values (for example, RV=1).

It is assumed that in multi-PDSCH configuration, the maximum number of PDSCHs scheduled by one DCI is N (N is 8, 4, or other values). For each PDSCH, Each of NDI and RV is indicated by 1 bit. In the information field of the scheduling DCI, if it is configured that multi-codeword transmission is supported (maxNrofCodeWordsScheduledByDCI = 2), the information corresponding to TB1 and TB2 is shown in Table 1:

Table 1 DCI information fields supporting two-codeword transmission

| Transport block | Field information | Bit width | Description | |
|---|---|---|---|---|
| Transport block 1 | Indication of Modulation and Coding Scheme (MCS) | 5 | Indicating a format index of the MCS | MCS=26, all RV=1, which indicates that TB1 is a disable state |
| | Indication of New Data Indicator (NDI) | N | Each PDSCH corresponds to 1 bit | |
| | Indication of Redundancy Version (RV) | N | Each PDSCH corresponds to 1 bit | |
| Transport block 2 | Indication of Modulation and Coding Scheme (MCS) | 5 | Indicating a format index of the MCS | MCS=26, all RV=1, which indicates that TB2 is a disable state |
| | Indication of New Data Indicator (NDI) | N | Each PDSCH corresponds to 1 bit | |
| | Indication of Redundancy Version (RV) | N | Each PDSCH corresponds to 1 bit | |

In Table 1, it is assumed that the predetermined MCS = 26 and all RVs = 1 indicate that the corresponding TB is in a disabled state, that is, the base station does not transmit the corresponding TB. During DCI scheduling, when the number of PDSCHs actually scheduled is less than N, a usual practice is to configure indication of the RV for the corresponding PDSCH not being scheduled as 0 or as a randomly configured value. When a combination of the RV and the MCS is used to indicate that the TB is in the disabled state, the RV for the PDSCH not being scheduled may also be indicated as a specific value (for example, 1), so that flexibility of scheduling parameters of the base station may be improved. It is assumed that the base station uses one DCI to schedule four PDSCHs (the configured maximum number is 8), as follows:

in TB 1, MCS = 26, RV [8] = {1,1,1,1,0,0,0,0};
in TB2, MCS = 26, RV [8] = {1,1,1,1,1,1,1,1};

the UE side considers that the TB1 is in the enabled state, that is, the base station transmits TB1 (because only part of RVs are 1), and considers that the TB2 is in the disabled state, that is, the base station does not transmit the TB2 (because all RVs are 1). It should be noted here that, of course, the protocol may also specify that the UE only determines a RV value corresponding to a scheduled PDSCH.

It should be noted that the above C11-C13 can be combined in any way, and the preset value is only an example, which does not limit the protection scope of the present disclosure.

Specifically, when the scheduling state judgment manner is A12, this step S2011 may be implemented specifically as follows:

when the network device indicates that the multi-codeword transmission is supported, determining the scheduling state of a second type of target transport blocks corresponding to the first PDSCH according to field information of the corresponding second type of target transport blocks in the information field of the first DCI; wherein the first PDSCH is any one of multiple PDSCHs scheduled by the first DCI, and the second type of target transport blocks is any type of transport blocks of transport blocks indicated in the information field of the first DCI.

It should be noted that, in this case, determination of the scheduling state is performed for a transport block of each PDSCH, and optionally, determining the scheduling state of the second type of target transport blocks corresponding to the first PDSCH according to the field information of the corresponding second type of target transport blocks in the information field of the first DCI includes:

in a case that the field information corresponding to the second type of target transport blocks in the information field of the first DCI meets a second condition, determining that the scheduling state of the second type of target transport blocks corresponding to the first PDSCH is a disabled state; or in a case that the field information corresponding to the second type of target transport blocks in the information field of the first DCI does not meet the second condition, determining that the scheduling state of the second type of target transport blocks corresponding to the first PDSCH is an enabled state; wherein the second condition includes at least one of following: C21, a value of bits, corresponding to the first PDSCH, in the indication of MCS is a fourth preset value, optionally, the fourth preset value may be 26; C22, a value of a bit, corresponding to the first PDSCH, in the indication of RV is a fifth preset value, optionally, the fifth preset value may be 1; C23, a value of a bit, corresponding to the first PDSCH, in the NDI is a sixth preset value. It should be noted that the fourth preset value, the fifth preset value, and the sixth preset value may be configured in manners of protocol agreement, indication by a network device, pre-configuration, or the like.

Specification implementation is described below by taking as an example that the first condition includes C21 and C22.

When the network device (for example, the base station) indicates that two-codeword transmission is supported (for example, maxNrofCodeWordsScheduledByDCI = 2), the scheduling states of TB1 and/or TB2 are determined according to information of the DCI. It is assumed that the terminal device supports determining the scheduling states of TB1 and/or TB2 based on A12, and the specific implementation is that the MCS corresponding to the corresponding TB is the fourth preset value (for example, MCS = 26), and all RV fields corresponding to the corresponding TB are the fifth preset value (for example, RV = 1).

It is assumed that in configuration of multiple PDSCHs, the maximum number of PDSCHs scheduled by one DCI is max_PDSCH (which is 8, 4, or other value). For each PDSCH, each of NDI and RV use 1 bit for indication. In the information field of a scheduling DCI, if it is configured to support multi-codeword transmission (maxNrofCodeWordsScheduledByDCI = 2), the information corresponding to TB1 and TB2 is shown in Table 2:

Table 2: DCI information fields supporting two-codeword transmission

| Transport block | Field information | Bit width | Description | |
|---|---|---|---|---|
| Transport block 1 | Indication of Modulation and Coding Scheme (MCS) | 5 | Indicating a format index of the MCS | MCS=26, all RV=1, which indicates that TB1 is a disabled state |
| | Indication of New Data Indicator (NDI) | max_PDSCH | Each PDSCH corresponds to 1 bit | |
| | Indication of Redundancy Version (RV) | max_PDSCH | Each PDSCH corresponds to 1 bit | |
| Transport block 2 | Indication of Modulation and Coding Scheme (MCS) | 5 | Indicating a format index of the MCS | MCS=26, all RV=1, which indicates that TB2 is a disabled state |
| | Indication of New Data Indicator (NDI) | max_PDSCH | Each PDSCH corresponds to 1 bit | |
| | Indication of Redundancy Version (RV) | max_PDSCH | Each PDSCH corresponds to 1 bit | |

In Table 2, it is assumed that the predetermined MCS = 26 and RV = 1 of a corresponding PDSCH indicates that the TB corresponding to the PDSCH is in a disabled state, that is, the base station does not transmit the corresponding TB.

It is assumed that the base station uses one DCI to schedule 8 PDSCHs (the configured maximum number is 8), and DCI scheduling information is shown in Table 3:

Table 3: a correspondence table between RVs corresponding to each PDSCH and TB scheduling states based on the DCI information field.

| | RV-1 | RV-2 | RV-3 | RV-4 | RV-5 | RV-6 | RV-7 | RV-8 |
|---|---|---|---|---|---|---|---|---|
| TB1 | 0 | 1 | 1 | 1 | 0 | 0 | 0 | 1 |
| TB2 | 1 | 0 | 1 | 1 | 1 | 1 | 1 | 0 |
| Description | TB2 is disabled | TB1 is disabled | TB1/2 is disabled | TB1/2 is disabled | TB2 is disabled | TB2 is disabled | TB2 is disabled | TB1 is disabled |

In Table 3, the MCSs of both scheduled TBs is 26.

RV-1 represents the RV of PDSCH 1, where RV= 0 of TB 1 and RV= 1 of TB2 indicate that TB1 is in the enabled state and TB2 is in the disabled state;

RV-2 represents the RV of PDSCH 2, where RV= 1 of TB1 and RV1 = 0 of TB2 indicate that TB1 is in the disabled state and TB2 is in the enabled state;

RV-3 represents the RV of PDSCH 3, where RV= 1 of TB1 and RV= 1 of TB2 indicate that TB1 is in the disabled state and TB2 is in the disabled state.

Other PDSCHs have similar conditions and will not be described here.

It should be noted that any combination of C21-C23 may be adopted, and the value of the preset value is only taken as an example, and does not limit the protection scope of the present disclosure.

It should also be noted that, optionally, when the scheduling states of all the transport blocks are determined to be the disabled state through the above A11 or A12, the terminal device determines that the network device does not send transport blocks, for example, when both determination conditions for TB1 and TB2 satisfy the disabled state, the terminal may think that the base station does not transmit any TB.

Optionally, when the scheduling states of all the transport blocks for the second PDSCH (that is, any PDSCH scheduled by the first DCI) are determined to be the disabled state through the above A11 or A12, the terminal device determines that the scheduling states of the third type of target transport blocks(which is at least one of the transport blocks indicated in the information field of the first DCI) corresponding to the second PDSCH are the disabled state; for example, the protocol may also specify that, for a particular PDSCH, when both judgment conditions of TB1 and TB2 satisfy disabling conditions, only one TB may be in the disabled state by default (e.g., TB2 in the disabled state, TB1 is transmitted).

It should be noted that by determining the scheduling state of the TB, the number of TBs to be transmitted can be determined, thereby ensuring that the HARQ-ACK information is generated smoothly.

Specific implementation of step S202 is described below.

Firstly, it should be noted that bundling configuration information for PDSCH feedback provided in the embodiments of the present disclosure may include the following cases:

D11. feedback information of different types of transport blocks corresponding to the same PDSCH are not bundled, and feedback information of different PDSCHs are not bundled;

D12. feedback information of different types of transport blocks corresponding to the same PDSCH are bundled, and feedback information of different PDSCHs are not bundled; it should be noted that this case is only applicable to the case of configuring the multi-codeword transmission;

D13. feedback information of different types of transport blocks corresponding to the same PDSCH are not bundled, and feedback information of different PDSCHs are bundled;

D14. feedback information of different types of transport blocks corresponding to the same PDSCH are bundled, and feedback information of different PDSCHs is bundled; it should be noted that this case is only applicable to the case of configuring the multi-codeword transmission.

It should also be noted that it is assumed that the base station configures one DCI to schedule the maximum number max_PDSCH of PDSCHs. Taking as an example that the multi-codeword transmission configured by the base station is dual-codeword transmission, the average bundling of the number of scheduled PDSCHs is adopted in the following cases:

case 1: when the base station configures single-codeword transmission, the number of HARQ-ACK bits after bundling among multiple PDSCHs is N;

case 2: when the base station configures dual-codeword transmission, and there is no bundling between two TBs, the number of HARQ-ACK bits after bundling among multiple PDSCHs is 2N;

case 3: when the base station configures dual-codeword transmission, and there is bundling between two TBs, the number of HARQ-ACK bits after bundling among multiple PDSCHs is N;

it should be noted that, in this case, an operation "bit and" is performed on the HARQ-ACKs of two TBs of the same PDSCH, and then the number N of HARQ-ACK bits after the bundling among multiple PDSCHs is generated in a manner of single-codeword transmission.

The implementation of step S202 is described in detail from the perspective of different configurations.

1. In a case that the bundling configuration information for PDSCH feedback is D11.

In this case, the implementation of step S202 includes at least one of the following:

E11: if codeword transmission is not configured or single-codeword transmission (maxNrofCodeWordsScheduledByDCI=1) is configured, then configuring, as a seventh preset value, a value of a first feedback bit corresponding to a PDSCH not being scheduled, configuring, according to a decoding result, a bit value of a second feedback bit corresponding to a PDSCH being scheduled, and generating HARQ-ACK information according to the first feedback bit and the second feedback bit. It should be noted that the seventh preset value can be negative-acknowledgement (NACK) or acknowledgement (ACK). The first feedback bit corresponding to each PDSCH contains 1 bit. For example, a PDSCH not being scheduled is correspondingly filled with NACK, and ACK/NACK for a scheduled PDSCH is fed back according to the actual decoding result. Optionally, for the PDSCH not being scheduled, bits in the corresponding HARQ-ACK information can also be filled with ACK, so that the base station can distinguish a situation that a DCI is not detected or a situation that decoding of this PDSCH scheduled by the DCI is wrong, which is beneficial for the base station to perform scheduling retransmission.

E12: if multi-codeword transmission is configured, a value of a third feedback bit of a TB corresponding to the PDSCH not being scheduled is configured to an eighth preset value, a value of a fourth feedback bit corresponding to a transport block in a disabled state corresponding to a scheduled PDSCH is configured as the eighth preset value. A bit value of a fifth feedback bit corresponding to a transport block in an enabled state corresponding to the scheduled PDSCH is configured according to a decoding result, and HARQ-ACK information is generated according to the third feedback bit, the fourth feedback bit and the fifth feedback bit. It should be noted that the feedback bit corresponding to each transport block contains 1 bit. Specifically, the eighth preset value can be NACK or ACK (so that the base station can distinguish a situation that a DCI is not detected or a situation that decoding of this PDSCH scheduled by the DCI is wrong, which is beneficial for the base station to perform scheduling retransmission).

Further, it should be noted that generating the HARQ-ACK information according to the third feedback bit, the fourth feedback bit and the fifth feedback bit, includes: sequencing the third feedback bit, the fourth feedback bit and the fifth feedback bit in a preset manner to generate the HARQ-ACK information.
The preset manner includes any one of the following:

E121: sequencing the third feedback bit, the fourth feedback bit and the fifth feedback bit according to a rule of codewords being in an ascending order first and then PDSCHs being in an ascending order;
E122: sequencing the third feedback bit, the fourth feedback bit and the fifth feedback bit according to a rule of PDSCHs being in an ascending order first and then codewords being in an ascending order.

For example, in the case that a DCI schedules 4 PDSCHs and 2 TBs, the feedback bit of the TB corresponding to each PDSCH is shown in Fig. 3, where b (0, 0) represents the decoding result of TB1 of PDSCH-1, and a feedback bit sequence in the HARQ-ACK information obtained according to E121 is arranged as: b (0, 0), b (1, 0), b (0, 1), b (1, 1), b (0, 2), b (1, 2), b (1, 2), b (0, 3), b (1, 3); a feedback bit sequence in the HARQ-ACK information obtained according to E122 is arranged as: b (0, 0), b (0, 1), b (0, 2), b (0, 3), b (1, 0), b (1, 1), b (1, 2), b (1, 3).
2. In a case that the bundling configuration information for PDSCH feedback is D12.
In this case, the implementation of step S202 includes steps S2021 to S2023.
Step S2021: determining a value of a sixth feedback bit corresponding to at least one type of transport blocks corresponding to each PDSCH in the case of configuring multi-codeword transmission.
Optionally, the specific implementation in this case includes at least one of the following:

F11: when a third PDSCH needs to transmit at least one type of transport blocks, setting, as a ninth preset value, the value of the sixth feedback bit of the transport block not transmitted; it should be noted that the ninth preset value can be ACK;
F12: when a fourth PDSCH needs to transmit at least one type of transport blocks and all the transport blocks corresponding to the fourth PDSCH are not transmitted, setting, as a tenth preset value, the values of the sixth feedback bits of all the transport blocks corresponding to the fourth PDSCH; it should be noted that the tenth preset value can be ACK or NACK; that is, , when at least one TB for a specific PDSCH needs to be transmitted, a HARQ-ACK corresponding to a TB that is not transmitted is filled with ACK (such as 1); when two TBs are not transmitted, the HARQ-ACKs corresponding to the TBs can be filled with ACK or NACK;
F13: setting, according to the decoding result, a bit value of the sixth feedback bit of the transport block scheduled for transmission corresponding to a fifth PDSCH; it should be noted that in this case, ACK or NACK for the TB scheduled for transmission is fed back according to the actual decoding result:
F14: for a sixth PDSCH which is not scheduled or which is invalidly scheduled, setting a sixth feedback bit of a transport block corresponding to the sixth PDSCH to a twelfth preset value; it should be noted that the twelfth preset value may be ACK or NACK, that is, for a PDSCH which is not scheduled or which is invalidly scheduled, the protocol determines to set the sixth feedback bit to NACK (for example, 0) or ACK.

Step S2022: determining the value of the seventh feedback bit corresponding to each PDSCH according to the value of the sixth feedback bit corresponding to at least one type of transport blocks corresponding to the PDSCH; it should be noted that in this case, the seventh feedback bit corresponding to each PDSCH is obtained by performing an "and" operation on the sixth feedback bits of all types of transport blocks corresponding to the PDSCH, and the seventh feedback bit includes one bit.
Step S2023: generating the HARQ-ACK information for the multiple PDSCHs according to the seventh feedback bit corresponding to each PDSCH; optionally, in this case, the HARQ-ACK information for the multiple PDSCHs is generated according to the seventh feedback bit corresponding to the scheduled PDSCH or the valid PDSCH. That is, in this case, all valid PDSCHs are fed back. For example, in this case, the feedback bit sequence in the HARQ-ACK information obtained from Fig. 3 is arranged as (& indicates "bit and"): b (0,0) & b (1,0), b (0,1) & b (1,1), b (0,2) & b (1,2), and b (0,3) & b (1,3).
3. In a case that the bundling configuration information for PDSCH feedback is D13.
It should be noted that since the specific implementation of the single-codeword is different from that of the multi-codeword, the specific implementations of step S202 in different codeword cases are described in detail as follow.
Case 1. a case that single-codeword transmission is configured or no codeword transmission is configured.
It should be noted that, in this case, the implementation of step S202 includes steps S2024 to S2027.

Step S2024: determining the number of PDSCHs scheduled by the first DCI or valid PDSCHs.

Optionally, determining the number of PDSCHs scheduled by the first DCI or valid PDSCHs includes: determining the number of PDSCHs scheduled by the first DCI or valid PDSCHs according to the number of PDSCHs actually scheduled obtained in a time-domain scheduling information table indicated by the first DCI.

Step S2025: grouping the PDSCHs scheduled by the first DCI or the valid PDSCHs.

Optionally, the implementation of the grouping in the embodiments of the present disclosure includes at least one of the following:

H21, if X is less than or equal to N, determining that Y is equal to X, and each group corresponds to one PDSCH; it should be noted that, X is the number of the valid PDSCHs or the scheduled PDSCHs, Y is the number of groups, N is the bit number of the HARQ-ACK information to be fed back, and both X and Y are integers greater than or equal to 1; That is to say, each group includes one PDSCH (that is, in each HARQ-ACK information, there is a decoding result corresponding to one PDSCH, which is equivalent to not performing bundling), and the remaining N-Y bits in the HARQ-ACK information are filled with ACK or NACK (corresponding to the feedback bits for PDSCHs not being scheduled, the ACK is filled; which facilitates the base station to identify whether the terminal fails to detect the DCI or all the PDSCHs are incorrectly decoded, so that the retransmission efficiency can be improved;

H22. if X is greater than N, determining that Y is equal to N, and determining the number of PDSCHs corresponding to each group in a first manner; it should be noted that the first manner includes one of the following:

H221. each bit of first (X mod N) bits in the HARQ-ACK information corresponds to a bundling result of decoding results of $\lfloor X/N \rfloor + 1$ PDSCHs, each bit of last N- (X mod N) bits in the HARQ-ACK information corresponds to a bundling result of decoding results of $\lfloor X/N \rfloor$ PDSCHs; it should be noted that 'Mod' means finding the remainder, and $\lfloor X/N \rfloor$ means rounding down X/N;

H222. each bit of the last (X mod N) bits in the HARQ-ACK information corresponds to a bundling result of decoding results of $\lfloor X/N \rfloor + 1$ PDSCHs; each bit of the first N-(X mod N) bits in the HARQ-ACK information corresponds to a bundling result of decoding results of $\lfloor X/N \rfloor$ PDSCHs.

Step S2026: bundling the decoding results of PDSCHs in each group after grouping, to obtain an eighth feedback bit.

Step S2027: generating HARQ-ACK information according to the eighth feedback bit corresponding to each group of PDSCHs.

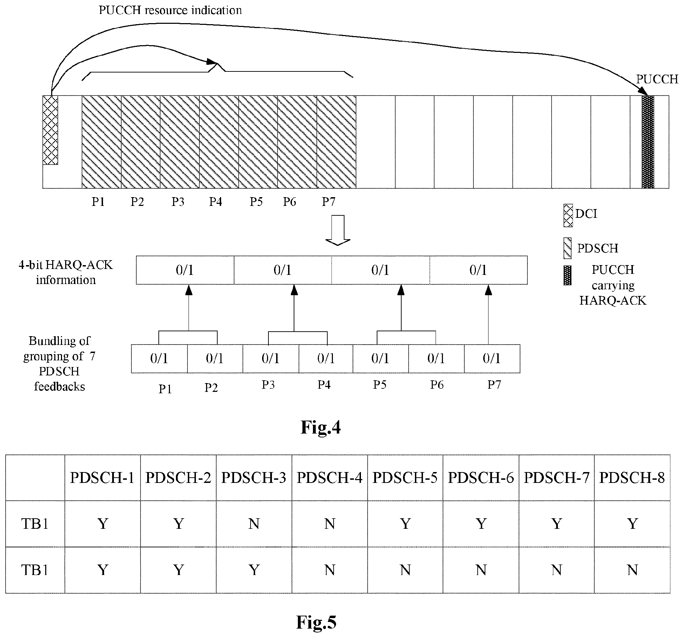

Specifically, taking, as an example, that the first manner is H221, as shown in Fig. 4, it is assumed that N = 4, X = 7, then each bit of the first (7 mod 4)=3 bits in the HARQ-ACK information is bundling of feedback information of $(\lfloor 7/4 \rfloor + 1) = 2$ PDSCHs; the last (4-3)=1 bit in the HARQ-ACK information is bundling of feedback information of $(\lfloor 7/4 \rfloor) = 1$ PDSCH.

Case 2. a case that multi-codeword transmission is configured

It should be noted that, in this case, the implementation of step S202 includes steps of S2028 and S2029.

Step S2028: determining the number of transport blocks included in each type of transport blocks involved in bundling calculation in the PDSCHs scheduled by the first DCI; it should be noted that the specific implementation in this case includes at least one of the following:

H31: determining the number of transport blocks included in each type of transport blocks according to the number of actually scheduled PDSCHs or valid PDSCHs and the scheduling states of the transport blocks; it should be noted that, in this case, the number of transport blocks included in each type of transport blocks is calculated separately, and the calculated numbers of transport blocks included in different types of transport blocks are usually different;

H32: uniformly calculating the number of transport blocks included in each type of transport blocks according to the number of actually scheduled PDSCHs or valid PDSCHs and the scheduling states of the transport blocks, wherein the numbers of transport blocks included in different types of transport blocks are the same; it should be noted that in this case, the numbers of transport blocks included in types of transport blocks are calculated uniformly (as long as 1 TB is in the enabled state or transmitted, the TB is counted in the number of transport blocks included in each type of transport blocks). The calculated numbers of transport blocks included in the types of transport blocks are the same.

For example, in an example that two TBs and eight PDSCHs are scheduled by one DCI, and the scheduling states of the TBs corresponding to each PDSCH are shown in Fig. 5, where N is the disabled state and Y is the enabled state. Then, according to the calculation method in H31, the obtained number of enabled TBs in TB1 is 6, and the obtained number of enabled TBs in TB2 is 3; according to the calculation method in H32, the obtained number of enabled TBs in TB1 is 7 and the obtained number of enabled TBs of TB2 is 7.

Step S2029: generating HARQ-ACK information for the multiple PDSCHs according to the number of transport blocks included in each type of transport blocks involved in bundling calculation in the PDSCHs scheduled by the first DCI and a corresponding decoding result.

It should be noted that the specific implementation in this case includes at least one of the following:

H41. according to the number of transport blocks included in each type of transport blocks and the corresponding decoding result, bundling the decoding results of each type of transport blocks to generate a bit sequence corresponding to each type of transport block; it should be noted that the HARQ-ACK information for the multiple PDSCHs is formed by concatenating bit sequences corresponding to the types of transport blocks; it should be noted that in this case, the decoding results of the transport blocks included in each type of transport blocks are bundled separately, and N-bit HARQ-ACK information is generated for each type of transport blocks.

H42: adding up the numbers of transport blocks included in different types of transport blocks, and according to the number of all transport blocks after the adding, bundling the decoding results of all transport blocks to generate multiple feedback bits; it should be noted that the multiple feedback bits is the HARQ-ACK information for the multiple PDSCHs; it should be noted that, in this case, the transport blocks included in each type of transport blocks are bundled together, and the TBs are grouped in the manner of H221 or H222, thereby generating a total of 2*N bits of HARQ-ACK information.

It should also be noted that generating the HARQ-ACK information for the multiple PDSCHs includes any one of following:

H51: generating the HARQ-ACK information for the multiple PDSCHs by sequencing the feedback bits according to a rule of codewords being in an ascending order first and then PDSCHs being in an ascending order;

H52: generating the HARQ-ACK information for the multiple PDSCHs by sequencing the feedback bits according to a rule of PDSCHs being in an ascending order first and then codewords being in an ascending order.

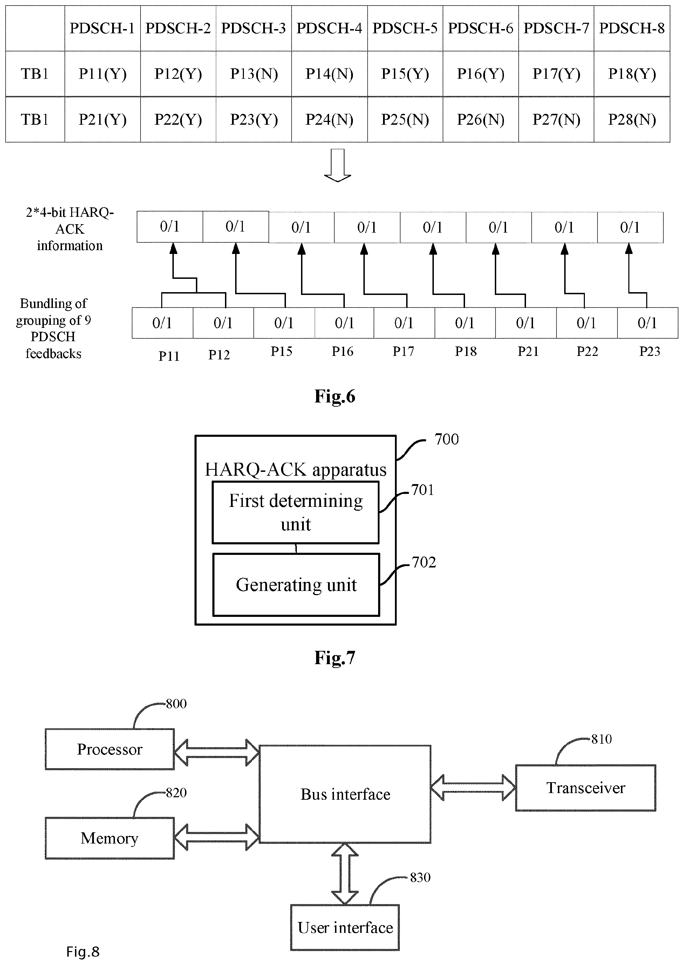

For example, in an example that two TBs and eight PDSCHs are scheduled by one DCI, and feedback bits are sequenced according to a rule of PDSCHs being in an ascending order first and then codewords being in an ascending order, the scheduling state of each TB and TB grouping and bundling are illustrated in Fig. 6. It should be noted that in Fig. 6, TB grouping is performed using the manner of H221.

4. In a case that the bundling configuration information for PDSCH feedback is D11.

In this case, the implementation of step S202 includes steps S20210 to S20212.

Step S20210: determining, for a case of configuring multi-codeword transmission, a value of a sixth feedback bit corresponding to at least one type of transport blocks corresponding to each PDSCH.

Optionally, the specific implementation in this case includes at least one of the following:

K11: setting the sixth feedback bit corresponding to the transport block in the disable state to an eleventh preset value; it should be noted that the eleventh preset value may be ACK (such as 1);

K12: for a sixth PDSCH which is not scheduled or which is invalidly scheduled, setting a sixth feedback bit of a transport block corresponding to the sixth PDSCH to a twelfth preset value; it should be noted that, the twelfth preset value may be ACK or NACK, that is, for the PDSCH which is not scheduled or which is invalidly scheduled, the protocol determines setting the PDSCH as NACK (such as 0) or ACK.

Step S20211: determining a value of a seventh feedback bit corresponding to each PDSCH according to the value of the sixth feedback bit corresponding to the at least one type of transport blocks corresponding to each PDSCH.

It should be noted that in this case, an "and" operation is performed on the sixth feedback bits of all types of transport blocks corresponding to each PDSCH, to obtain the seventh feedback bit corresponding to each PDSCH, and the seventh feedback bit includes 1 bit.

Step S20212: generating HARQ-ACK information for the multiple PDSCHs according to the seventh feedback bit corresponding to each PDSCH.

Optionally, in this case, the HARQ-ACK information for the multiple PDSCHs is generated according to the seventh feedback bit corresponding to the scheduled PDSCH or the valid PDSCH. That is, in this case, all valid PDSCHs are fed back. Specifically, when the HARQ-ACK information for the multiple PDSCHs is generated. First, the valid PDSCHs or the scheduled PDSCHs need to be ranked and needs to be grouped according to an order of the ranking, to realize bundling of feedback bits belonging to a group of PDSCHs, and then the HARQ-ACK information is generated. Implementation of grouping PDSCHs can be obtained by referring to the grouping method in the above description, and is not describe in detail herein.

It should be noted here that, for multi-PDSCH scheduling scenarios, the number N of bits of HARQ-ACK being fed back is determined in advance. When the actual scheduled PDSCH or TB is less than N in length, the terminal needs to fill in predetermined information (such as NACK or ACK). In this case, the base station and the terminal can also use the useless bit information to transmit other information, such as, under the unlicensed spectrum, the terminal feeds back results of channel measurement or channel monitoring on corresponding information bits of the HARQ-ACK.

It needs to be explained that, in the embodiments of the present disclosure, the scheduling state of the TB of each PDSCH is determined in a case of multi-PDSCH scheduling, thereby improving the scheduling flexibility of the base station, providing a different bundling technical solution of HARQ-ACKs, making better use of limited feedback information and improving feedback efficiency.

It should be explained here that a manner in which the terminal device sends the HARQ-ACK information should be the same as the manner in which the network device receives and analyzes HARQ-ACK information, to ensure the same understanding between the terminal device and the network device.

The technical solutions provided by the embodiments of the present disclosure can be applied to various systems, in particular, applied to the 5G systems. Applicable systems may, for example, be a global system of mobile communication (GSM), a code division multiple access (CDMA) system, a Wideband Code Division Multiple Access (WCDMA) general packet radio service (GPRS) systems, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These systems each include a terminal device and a network device. The systems may also include core network parts, such as an Evolved Packet System (EPS), a 5G System (5GS), etc.

The terminal device according to the embodiments of the present disclosure may be a device providing voice and/or data connectivity to a user, a handheld device having a wireless connection function, or other processing device connected to a wireless modem, etc. In different systems, names of terminal devices may be different. For example, in the 5G systems, terminal devices can be called User Equipment (UE). A wireless terminal device can communicate with one or more Core Networks (CN) via a Radio Access Network (RAN), The wireless terminal device may be a mobile terminal device, such as a mobile telephone (or a "cellular" telephone) and a computer having a mobile terminal device, such as a portable, pocket-sized, hand-held, computer-built or vehicle-mounted mobile device, which exchanges language and/or data with a wireless access network. For example, a Personal Communication Service (PCS) telephone, a cordless telephone, a Session Initiated Protocol (SIP) telephone, a Wireless Local Loop (WLL) station, a Personal Digital Assistant (PDA), and the like. The wireless terminal device may also be referred to as a system, a subscriber unit, a subscriber station, a mobile station, a mobile, a remote station, an access point, a remote terminal, an access terminal, a user terminal, a user agent, and a user device, which are not limited in the embodiments of the present disclosure.

The network device according to the embodiments of the present disclosure may be a base station, and the base station may include multiple cells providing services for terminals. Depending on the specific application, the base station may also be referred to as an access point, or may be a device, in the access network, that communicates with a wireless terminal device through one or more sectors on the air interface, or another name. The network device may be used to exchange received over-the-air frames with Internet Protocol (IP) packets as a router between the wireless terminal device and the rest of the access network, wherein the rest of the access network may include an Internet Protocol (IP) communication network. The network device can also coordinate attribute management of the air interface. For example, the network device according to the embodiments of the present disclosure may be a network device (Base Transceiver Station, BTS) in the Global System for Mobile Communications (GSM) or Code Division Multiple Access (CDMA), or can be a network device (Node B) in a Wide-band Code Division Multiple Access (WCDMA), an evolutionary Node B, eNB or e-NodeB in a long term evolution (LTE) system, a 5G base station (gNB) in a next generation system, a Home evolved Node B (HeNB), a relay node, a home base station (femto), a pico base station, etc., which are not limited in the embodiments of the present disclosure. In some network architectures, network devices may include centralized unit (CU) nodes and distributed unit (DU) nodes, which may also be geographically separated.

Multiple Input Multiple Output (MIMO) transmission can be carried out between the network device and the terminal device by using one or more antennas respectively, and the MIMO transmission can be a Single User MIMO (SU-MIMO) or a Multiple User MIMO (MU-MIMO). The MIMO transmission can be two-dimension MIMO (2D-MIMO), three dimension MIMO (3D-MIMO), Full Dimension MIMO

(FD-MIMO) or massive-MIMO, diversity transmission or pre-coding transmission or beamforming transmission according to a pattern and the number of root antenna combinations.

As shown in Fig. 7, the embodiments of the present disclosure provide a Hybrid Automatic Repeat reQuest (HARQ) acknowledgement feedback device 700, which is applied to a terminal device. The device includes:

a first determining unit 701, configured for determining a scheduling state of at least one type of transport blocks corresponding to multiple physical downlink shared channels (PDSCHs) scheduled by first downlink control information (DCI), wherein the scheduling state includes an enabled state or a disabled state;

a generating unit 702, configured for generating Hybrid Automatic Repeat reQuest Acknowledgement (HARQ-ACK) information of the multiple PDSCHs scheduled by the first DCI, according to the scheduling state of the at least one type of transport blocks corresponding to the multiple PDSCHs scheduled by the first DCI and bundling configuration information for PDSCH feedback;

wherein any type of transport blocks of the at least one type of transport blocks are transport blocks having the same identifier in the multiple PDSCHs scheduled by the first DCI.

Optionally, the first determining unit 701 is configured for: obtaining a scheduling state judgment manner; determining at least one scheduling state of at least one type of transport blocks corresponding to the multiple PDSCHs scheduled by the first DCI according to the scheduling state judgment manner.

The scheduling state judgment manner includes any one of the following:

determining the scheduling state of each type of transport blocks corresponding to the multiple PDSCHs scheduled by the first DCI, in one-time judgment;

judging the scheduling state of each type of transport blocks corresponding to the multiple PDSCHs scheduled by the first DCI, independently.

Optionally, the implementation of obtaining the scheduling state judgment manner includes at least one of the following:

obtaining the scheduling state judgment manner indicated by a network device;

obtaining the scheduling state judgment manner agreed by a protocol;

determining a used scheduling state judgment manner, according to a scheduling state judgment capability supported by the terminal device.

Optionally, in case of obtaining the scheduling state judgment manner indicated by a network device or determining a used scheduling state judgment manner, according to a scheduling state judgment capability supported by the terminal device, the device further includes: a sending unit, configured for sending terminal capability information to the network device; wherein, the terminal capability information includes a scheduling state judgment manner supported by the terminal device.

Optionally, in case of the scheduling state judgment manner of determining the scheduling state of each type of transport blocks corresponding to the multiple PDSCHs scheduled by the first DCI in one-time judgment, implementation of determining the scheduling state of at least one type of transport blocks corresponding to the multiple PDSCHs scheduled by the first DCI includes:

when the network device indicates that multi-codeword transmission is supported, determining a scheduling state of a first type of target transport blocks corresponding to each of the multiple PDSCHs scheduled by the first DCI, according to field information, corresponding to the first type of target transport blocks, in an information field of the first DCI; wherein the first type of target transport blocks is any type of transport blocks of the transport blocks indicated by the information field of the first DCI.

Optionally, implementation of determining the scheduling state of the first type of target transport blocks corresponding to each of the multiple PDSCHs scheduled by the first DCI, according to field information, corresponding to the first type of target transport blocks, in the information field of the first DCI includes:

in a case that the field information corresponding to the first type of target transport blocks in the information field of the first DCI meets a first condition, determining that the scheduling state of the first type of target transport blocks corresponding to each of the multiple PDSCHs scheduled by the first DCI is a disabled state; or in a case that the field information corresponding to the first type of target transport blocks in the information field of the first DCI does not meet a first condition, determining that the scheduling state of the first type of target transport blocks corresponding to each of the multiple PDSCHs scheduled by the first DCI is an enabled state.

The first condition includes at least one of the following:

a value indicated by a modulation and coding scheme (MCS) is a first preset value;
values of part or all of bits in a redundancy version (RV) indicator are second preset values;
a value of a new data indicator (NDI) is a third preset value.

Optionally, in case of the scheduling state judgment manner of judging the scheduling state of each type of transport blocks corresponding to the multiple PDSCHs scheduled by the first DCI, independently, implementation of determining the scheduling state of at least one type of transport blocks corresponding to the multiple PDSCHs scheduled by the first DCI includes:
when the network device indicates that the multi-codeword transmission is supported, determining the scheduling state of a second type of target transport blocks corresponding to the first PDSCH according to field information of the corresponding second type of target transport blocks in the information field of the first DCI; wherein the first PDSCH is any one of multiple PDSCHs scheduled by the first DCI, and the second type of target transport blocks is any type of transport blocks of transport blocks indicated in the information field of the first DCI.

Optionally, implementation of determining the scheduling state of the second type of target transport blocks corresponding to the first PDSCH according to the field information of the corresponding second type of target transport blocks in the information field of the first DCI includes:
in a case that the field information corresponding to the second type of target transport blocks in the information field of the first DCI meets a second condition, determining that the scheduling state of the second type of target transport blocks corresponding to the first PDSCH is a disabled state; or in a case that the field information corresponding to the second type of target transport blocks in the information field of the first DCI does not meet the second condition, determining that the scheduling state of the second type of target transport blocks corresponding to the first PDSCH is an enabled state; wherein the second condition includes at least one of following: a value of bits, corresponding to the first PDSCH, in the indication of MCS is a fourth preset value; a value of a bit, corresponding to the first PDSCH, in the indication of RV is a fifth preset value; a value of a bit, corresponding to the first PDSCH, in the NDI is a sixth preset value.

Optionally, the device further includes the following:

a second determining unit, configured for, after the first determining unit 701 determines the scheduling state of at least one type of transport blocks corresponding to the multiple PDSCHs scheduled by the first DCI, determining that the network device does not send transport blocks when it is determined that the scheduling states of all corresponding transport blocks in the information field of the first DCI are the disabled state;
a third determining unit, configured for, after the first determining unit 701 determines the scheduling state of at least one type of transport blocks corresponding to the multiple PDSCHs scheduled by the first DCI, determining that the scheduling states of the third type of target transport blocks corresponding to the second PDSCH are the disabled state when it is determined that the scheduling states of all transport blocks corresponding to the second PDSCH in the information field of the first DCI are the disabled state, wherein the second PDSCH is any PDSCH scheduled by the first DCI, the third type of target transport blocks is at least one transport block of the transport blocks indicated in the information field of the first DCI.

Optionally, in a case that bundling configuration information is that there is no bundling of feedback information of different types of transport blocks corresponding to the same PDSCH, and there is no bundling of feedback information of different PDSCHs, the generating unit 702 is configured for implementing at least one of the following:

if codeword transmission is not configured or single-codeword transmission is configured, then configuring, as a seventh preset value, a value of a first feedback bit corresponding to a PDSCH not being scheduled, configuring, according to a decoding result, a bit value of a second feedback bit corresponding to a PDSCH being scheduled, and generating HARQ-ACK information according to the first feedback bit and the second feedback bit;
if multi-codeword transmission is configured, configuring, to an eighth preset value, a value of a third feedback bit of a TB corresponding to the PDSCH not being scheduled, configuring, to the eighth preset value, a value of a fourth feedback bit corresponding to a transport block in a disabled state corresponding to a scheduled PDSCH; configuring, according to a decoding result, a bit value of a fifth feedback bit corresponding to a transport block in an enabled state corresponding to the PDSCH being scheduled, and generating HARQ-ACK information according to the third feedback bit, the fourth feedback bit and the fifth feedback bit.

Optionally, implementation of generating the HARQ-ACK information according to the third feedback bit, the fourth feedback bit and the fifth feedback bit includes: sequencing the third feedback bit, the fourth feedback bit and the fifth feedback bit in a preset manner to generate the HARQ-ACK information; wherein the preset manner includes any one of the following:

sequencing the third feedback bit, the fourth feedback bit and the fifth feedback bit according to a rule of codewords being in an ascending order first and then PDSCHs being in an ascending order;

sequencing the third feedback bit, the fourth feedback bit and the fifth feedback bit according to a rule of PDSCHs being in an ascending order first and then codewords being in an ascending order.

Optionally, in a case that bundling configuration information is that there is bundling of feedback information of different types of transport blocks corresponding to the same PDSCH and there is no bundling of feedback information of different PDSCHs, or there is bundling of feedback information of different types of transport blocks corresponding to the same PDSCH and there is bundling of feedback information of different PDSCHs, the generating unit 702 is configured for implementing the following:

determining a value of a sixth feedback bit corresponding to at least one type of transport blocks corresponding to each PDSCH in the case of configuring multi-codeword transmission;

determining a value of a seventh feedback bit corresponding to each PDSCH according to the value of the sixth feedback bit corresponding to at least one type of transport blocks corresponding to the PDSCH;

generating the HARQ-ACK information for the multiple PDSCHs according to the seventh feedback bit corresponding to each PDSCH.

Optionally, determining the value of the sixth feedback bit corresponding to at least one type of transport blocks corresponding to each PDSCH includes at least one of following:

when a third PDSCH needs to transmit at least one type of transport blocks, setting, to a ninth preset value, the value of the sixth feedback bit of the transport block not transmitted;

when a fourth PDSCH needs to transmit at least one type of transport blocks and all the transport blocks corresponding to the fourth PDSCH are not transmitted, setting, to a tenth preset value, the values of the sixth feedback bits of all the transport blocks corresponding to the fourth PDSCH;

setting, according to the decoding result, a bit value of the sixth feedback bit of the transport block scheduled for transmission corresponding to a fifth PDSCH;

setting the sixth feedback bit corresponding to the transport block in the disable state to an eleventh preset value;

for a sixth PDSCH which is not scheduled or which is invalidly scheduled, setting a sixth feedback bit of a transport block corresponding to the sixth PDSCH to a twelfth preset value.

Optionally, implementation of generating the HARQ-ACK information for the multiple PDSCHs according to the seventh feedback bit corresponding to each PDSCH includes: generating the HARQ-ACK information for the multiple PDSCHs according to the seventh feedback bit corresponding to the scheduled PDSCH or the valid PDSCH.

Optionally, in a case that bundling configuration information is that there is no bundling of feedback information of different types of transport blocks corresponding to the same PDSCH and there is bundling of feedback information of different PDSCHs, the generating unit 702 is configured for implementing the following:

determining the number of PDSCHs scheduled by the first DCI or valid PDSCHs, when single-codeword transmission is configured or no codeword transmission is configured;

grouping the PDSCHs scheduled by the first DCI or the valid PDSCHs;

bundling the decoding results of PDSCHs in each group after grouping, to obtain an eighth feedback bit;

generating HARQ-ACK information according to the eighth feedback bit corresponding to each group of PDSCHs.

Optionally, implementation manner of grouping the PDSCHs scheduled by the first DCI or the valid PDSCHs includes at least one of the following:

if X is less than or equal to N, determining that Y is equal to X, and each group corresponds to one PDSCH;

if X is greater than N, determining that Y is equal to N, and determining the number of PDSCHs corresponding to each group in a first manner;

wherein, X is the number of valid PDSCHs or scheduled PDSCHs, Y is the number of groups, N is the bit number of the HARQ-ACK information to be fed back, and both X and Y are integers greater than or equal to 1.

The first manner includes one of the following:

each bit of first (X mod N) bits in the HARQ-ACK information corresponds to a bundling result of decoding results

of $\lfloor X/N \rfloor + 1$ PDSCHs, each bit of last N- (X mod N) bits in the HARQ-ACK information correspond to a bundling result of decoding results of [X/N] PDSCHs;

each bit of the last (X mod N) bits in the HARQ-ACK information corresponds to a bundling result of decoding results of $\lfloor X/N \rfloor + 1$ PDSCHs; each bit of the first N-(X mod N) bits in the HARQ-ACK information corresponds to a bundling result of decoding results of $\lfloor X/N \rfloor$ PDSCHs; wherein 'Mod' means finding the remainder, and $\lfloor X/N \rfloor$ means rounding down X/N.

Optionally, implementation of determining the number of PDSCHs scheduled by the first DCI or valid PDSCHs includes: determining the number of PDSCHs scheduled by the first DCI or valid PDSCHs according to the number of PDSCHs actually scheduled obtained in a time-domain scheduling information table indicated by the first DCI.

Optionally, in a case that the bundling configuration information is that there is no bundling of feedback information of different types of transport blocks corresponding to the same PDSCH and there is bundling of feedback information of different PDSCHs, the generating unit 702 is configured for implementing the following:

determining the number of transport blocks included in each type of transport blocks involved in bundling calculation in the PDSCHs scheduled by the first DCI, in a case that multi-codeword transmission is configured;
generating HARQ-ACK information for the multiple PDSCHs according to the number of transport blocks included in each type of transport blocks involved in bundling calculation in the PDSCHs scheduled by the first DCI and a corresponding decoding result.

Optionally, determining the number of transport blocks included in each type of transport blocks involved in bundling calculation in the PDSCHs scheduled by the first DCI, in a case that multi-codeword transmission is configured, includes at least one of the following:

determining the number of transport blocks included in each type of transport blocks according to the number of actually scheduled PDSCHs or valid PDSCHs and the scheduling states of the transport blocks;
uniformly calculating the number of transport blocks included in each type of transport blocks according to the number of actually scheduled PDSCHs or valid PDSCHs and the scheduling states of the transport blocks, wherein the numbers of transport blocks included in different types of transport blocks are the same.

Optionally, implementation of generating HARQ-ACK information for the multiple PDSCHs according to the number of transport blocks included in each type of transport blocks involved in bundling calculation in the PDSCHs scheduled by the first DCI and the corresponding decoding result includes at least one of the following:

according to the number of transport blocks included in each type of transport blocks and the corresponding decoding result, bundling the decoding results of each type of transport blocks to generate a bit sequence corresponding to each type of transport block;
adding up the numbers of transport blocks included in different types of transport blocks, and according to the number of all transport blocks after the adding, bundling the decoding results of all transport blocks to generate multiple feedback bits.

Optionally, implementation of generating the HARQ-ACK information for the multiple PDSCHs includes any one of following:

generating the HARQ-ACK information for the multiple PDSCHs by sequencing the feedback bits according to a rule of codewords being in an ascending order first and then PDSCHs being in an ascending order;
generating the HARQ-ACK information for the multiple PDSCHs by sequencing the feedback bits according to a rule of PDSCHs being in an ascending order first and then codewords being in an ascending order.

It should be noted that the device of the embodiments of the present disclosure further includes a transceiver unit, w configured to receive and transmit data.

It should be noted that, the device in the embodiments is a device corresponding to the method in the above embodiments, and all the implementations in the above embodiments for describing the method are applicable to the embodiments describing the device and can achieve the same technical effect.

It should be noted that division of units in the embodiments of the present disclosure is schematic, which is only division of logical functions, and there may be other division in actual implementation. In addition, each functional unit in each embodiment of the present disclosure may be integrated in one processing unit, or each unit may physically exist separately, or two or more units may be integrated in one unit. The integrated unit can be realized in the form of hardware or software functional units. The integrated unit, if implemented as a software functional unit and sold or used as a separate product, may be stored in a processor-readable storage medium. Based on such understanding, an essential part or a part contributing to the related art of the technical solutions of the present disclosure or all of a part of the technical solutions of the present disclosure may be embodied in the form of a computer software product stored in storage media which includes multiple instructions for causing a computer device (which may be a personal computer, a server, or a network device, etc.) or a processor to perform all or a portion of the steps of the methods described in the various embodiments of the present disclosure. The aforementioned storage media include various media capable of storing program codes, such as a U disk, a mobile hard disk, a Read-Only Memory (ROM), a Random Access Memory (RAM), a magnetic disk or an optical disk.

As shown in Fig. 8, the embodiments of the present disclosure further provide a terminal device. The terminal device includes a processor 800, a transceiver 810, a memory 820, and a program stored on the memory 820 and executable by the processor 800. The transceiver 810 is connected to the processor 800 and the memory 820 through a bus interface, wherein the processor 800 is configured to read the program in the memory and execute the following processes:

determining a scheduling state of at least one type of transport blocks corresponding to multiple physical downlink shared channels (PDSCHs) scheduled by first downlink control information (DCI), wherein the scheduling state includes an enabled state or a disabled state;

generating Hybrid Automatic Repeat reQuest Acknowledgement (HARQ-ACK) information of the multiple PDSCHs scheduled by the first DCI, according to the scheduling state of the at least one type of transport blocks corresponding to the multiple PDSCHs scheduled by the first DCI and bundling configuration information for PDSCH feedback;

wherein any type of transport blocks of the at least one type of transport blocks are transport blocks having the same identifier in the multiple PDSCHs scheduled by the first DCI.

The transceiver 810 is configured for receiving and transmitting data under the control of the processor 800.

In Fig. 8, the bus architecture may include any number of interconnected buses and bridges, specifically various circuits such as one or more processors represented by the processor 800 and a memory represented by the memory 820 are linked together. The bus architecture may also link together various other circuits, such as peripheral devices, voltage regulators, power management circuits, and the like, all of which are well known in the art and thus will not be described further herein. A bus interface provides an interface. The transceiver 810 may be multiple elements, i.e., including a transmitter and a receiver, providing a unit for communicating with various other devices over a transmission medium. The transmission medium includes wireless channels, wired channels, optical fiber cables, and the like. For different user devices, a user interface 830 may also be an interface capable of externally connecting to desired devices, the connected devices include, but are not limited to, a keypad, a display, a speaker, a microphone, a joystick, and the like.

The processor 800 is responsible for managing the bus architecture and general processing. The memory 820 may store data used by the processor 800 when performing operations.

Optionally, the processor 800 may be a CPU (Central Processing Unit), an ASIC (Application Specific Integrated Circuit), an FPGA (Field-Programmable Gate Array) or a CPLD (Complex Programmable Logic Device). The processor can also adopt a multi-core architecture.

The processor executes any of the methods provided in the embodiments of the present disclosure in accordance with executable instructions obtained by calling a computer program stored in the memory. The processor and the memory may also be physically arranged separately.

Further, the processor is configured to call the program in the memory to execute following:

obtaining a scheduling state judgment manner;

determining at least one scheduling state of at least one type of transport blocks corresponding to the multiple PDSCHs scheduled by the first DCI according to the scheduling state judgment manner.

The scheduling state judgment manner includes any one of the following:

determining the scheduling state of each type of transport blocks corresponding to the multiple PDSCHs scheduled by the first DCI, in one-time judgment;

judging the scheduling state of each type of transport blocks corresponding to the multiple PDSCHs scheduled by the first DCI, independently.

Further, the processor is configured to call the program in the memory to execute at least one of the following:

> obtaining the scheduling state judgment manner indicated by a network device;
> obtaining the scheduling state judgment manner agreed by a protocol;
> determining a used scheduling state judgment manner, according to a scheduling state judgment capability supported by the terminal device.

Optionally, in case of obtaining the scheduling state judgment manner indicated by a network device or determining a used scheduling state judgment manner, according to a scheduling state judgment capability supported by the terminal device, the processor is configured to call the program in the memory to execute:
sending terminal capability information to the network device through the transceiver; wherein, the terminal capability information includes a scheduling state judgment manner supported by the terminal device.

Optionally, in case of the scheduling state judgment manner of determining the scheduling state of each type of transport blocks corresponding to the multiple PDSCHs scheduled by the first DCI in one-time judgment, the processor is configured to call the program in the memory to execute following:
when the network device indicates that multi-codeword transmission is supported, determining a scheduling state of a first type of target transport blocks corresponding to each of the multiple PDSCHs scheduled by the first DCI, according to field information, corresponding to the first type of target transport blocks, in an information field of the first DCI; wherein the first type of target transport blocks is any type of transport blocks of the transport blocks indicated by the information field of the first DCI.

Further, the processor is configured to call the program in the memory to execute following:
in a case that the field information corresponding to the first type of target transport blocks in the information field of the first DCI meets a first condition, determining that the scheduling state of the first type of target transport blocks corresponding to each of the multiple PDSCHs scheduled by the first DCI is a disabled state; or in a case that the field information corresponding to the first type of target transport blocks in the information field of the first DCI does not meet a first condition, determining that the scheduling state of the first type of target transport blocks corresponding to each of the multiple PDSCHs scheduled by the first DCI is an enabled state.

The first condition includes at least one of the following:

> a value indicated by a modulation and coding scheme (MCS) is a first preset value;
> values of part or all of bits in a redundancy version (RV) indicator are second preset values;
> a value of a new data indicator (NDI) is a third preset value.

Further, in case of the scheduling state judgment manner of judging the scheduling state of each type of transport blocks corresponding to the multiple PDSCHs scheduled by the first DCI, independently, the processor is configured to call the program in the memory to execute the following:
when the network device indicates that the multi-codeword transmission is supported, determining the scheduling state of a second type of target transport blocks corresponding to the first PDSCH according to field information of the corresponding second type of target transport blocks in the information field of the first DCI; wherein the first PDSCH is any one of multiple PDSCHs scheduled by the first DCI, and the second type of target transport blocks is any type of transport blocks of transport blocks indicated in the information field of the first DCI.

Further, the processor is configured to call the program in the memory to execute the following:

> in a case that the field information corresponding to the second type of target transport blocks in the information field of the first DCI meets a second condition, determining that the scheduling state of the second type of target transport blocks corresponding to the first PDSCH is a disabled state; or in a case that the field information corresponding to the second type of target transport blocks in the information field of the first DCI does not meet the second condition, determining that the scheduling state of the second type of target transport blocks corresponding to the first PDSCH is an enabled state;
> wherein the second condition includes at least one of following: a value of bits, corresponding to the first PDSCH, in the indication of MCS is a fourth preset value; a value of a bit, corresponding to the first PDSCH, in the indication of RV is a fifth preset value; a value of a bit, corresponding to the first PDSCH, in the NDI is a sixth preset value.

Further, the processor is configured to call the program in the memory to execute any one of the following:

> determining that the network device does not send transport blocks when it is determined that the scheduling states of all corresponding transport blocks in the information field of the first DCI are the disabled state;
> determining that the scheduling states of the third type of target transport blocks corresponding to the second PDSCH are the disabled state when it is determined that the scheduling states of all transport blocks corresponding to the second PDSCH in the information field of the first DCI are the disabled state, wherein the second PDSCH is any PDSCH scheduled by the first DCI, the third type of target transport blocks is at least one transport block of the transport blocks indicated in the information field of the first DCI.

Further, in a case that bundling configuration information is that there is no bundling of feedback information of different types of transport blocks corresponding to the same PDSCH, and there is no bundling of feedback information of different PDSCHs, the processor is configured to call the program in the memory to execute further at least one of the following:

if codeword transmission is not configured or single-codeword transmission is configured, then configuring, as a seventh preset value, a value of a first feedback bit corresponding to a PDSCH not being scheduled, configuring, according to a decoding result, a bit value of a second feedback bit corresponding to a PDSCH being scheduled, and generating HARQ-ACK information according to the first feedback bit and the second feedback bit;
if multi-codeword transmission is configured, configuring, to an eighth preset value, a value of a third feedback bit of a TB corresponding to the PDSCH not being scheduled, configuring, to the eighth preset value, a value of a fourth feedback bit corresponding to a transport block in a disabled state corresponding to a scheduled PDSCH; configuring, according to a decoding result, a bit value of a fifth feedback bit corresponding to a transport block in an enabled state corresponding to the PDSCH being scheduled, and generating HARQ-ACK information according to the third feedback bit, the fourth feedback bit and the fifth feedback bit.

Further, the processor is configured to call the program in the memory to execute the following: sequencing the third feedback bit, the fourth feedback bit and the fifth feedback bit in a preset manner to generate the HARQ-ACK information; wherein the preset manner includes any one of the following:

sequencing the third feedback bit, the fourth feedback bit and the fifth feedback bit according to a rule of codewords being in an ascending order first and then PDSCHs being in an ascending order;
sequencing the third feedback bit, the fourth feedback bit and the fifth feedback bit according to a rule of PDSCHs being in an ascending order first and then codewords being in an ascending order.

Further, in a case that bundling configuration information is that there is bundling of feedback information of different types of transport blocks corresponding to the same PDSCH and there is no bundling of feedback information of different PDSCHs, or there is bundling of feedback information of different types of transport blocks corresponding to the same PDSCH and there is bundling of feedback information of different PDSCHs, the processor is configured to call the program in the memory to execute the following:

determining a value of a sixth feedback bit corresponding to at least one type of transport blocks corresponding to each PDSCH in the case of configuring multi-codeword transmission;
determining a value of a seventh feedback bit corresponding to each PDSCH according to the value of the sixth feedback bit corresponding to at least one type of transport blocks corresponding to the PDSCH;
generating the HARQ-ACK information for the multiple PDSCHs according to the seventh feedback bit corresponding to each PDSCH.

Further, the processor is configured to call the program in the memory to execute at least one of following:

when a third PDSCH needs to transmit at least one type of transport blocks, setting, to a ninth preset value, the value of the sixth feedback bit of the transport block not transmitted;
when a fourth PDSCH needs to transmit at least one type of transport blocks and all the transport blocks corresponding to the fourth PDSCH are not transmitted, setting, to a tenth preset value, the values of the sixth feedback bits of all the transport blocks corresponding to the fourth PDSCH;
setting, according to the decoding result, a bit value of the sixth feedback bit of the transport block scheduled for transmission corresponding to a fifth PDSCH;
setting the sixth feedback bit corresponding to the transport block in the disable state to an eleventh preset value;
for a sixth PDSCH which is not scheduled or which is invalidly scheduled, setting a sixth feedback bit of a transport block corresponding to the sixth PDSCH to a twelfth preset value.

Further, the processor is configured to call the program in the memory to execute the following:
generating the HARQ-ACK information for the multiple PDSCHs according to the seventh feedback bit corresponding to the scheduled PDSCH or the valid PDSCH.

Further, in a case that bundling configuration information is that there is no bundling of feedback information of different types of transport blocks corresponding to the same PDSCH and there is bundling of feedback information of different PDSCHs, the processor is configured to call the program in the memory to execute the following:

determining the number of PDSCHs scheduled by the first DCI or valid PDSCHs, when single-codeword transmission is configured or no codeword transmission is configured;
grouping the PDSCHs scheduled by the first DCI or the valid PDSCHs;
bundling the decoding results of PDSCHs in each group after grouping, to obtain an eighth feedback bit;
generating HARQ-ACK information according to the eighth feedback bit corresponding to each group of PDSCHs.

Further, the processor is configured to call the program in the memory to execute at least one of the following:

if X is less than or equal to N, determining that Y is equal to X, and each group corresponds to one PDSCH;
if X is greater than N, determining that Y is equal to N, and determining the number of PDSCHs corresponding to each group in a first manner;
wherein, X is the number of valid PDSCHs or scheduled PDSCHs, Y is the number of groups, N is the bit number of the HARQ-ACK information to be fed back, and both X and Y are integers greater than or equal to 1.

The first manner includes one of the following:

each bit first (X mod N) bits in the HARQ-ACK information corresponds to a bundling result of decoding results of $\lfloor X/N \rfloor + 1$ PDSCHs, each bit of last N- (X mod N) bits in the HARQ-ACK information corresponds to a bundling result of decoding results of [X/N] PDSCHs;
each bit of the last (X mod N) bits in the HARQ-ACK information corresponds to a bundling result of decoding results of $\lfloor X/N \rfloor + 1$ PDSCHs; each bit of the first N-(X mod N) bits in the HARQ-ACK information corresponds to a bundling result of decoding results of [X/N] PDSCHs; wherein 'Mod' means finding the remainder, and $\lfloor X/N \rfloor$ means rounding down X/N.

Further, the processor is configured to call the program in the memory to execute the following:
determining the number of PDSCHs scheduled by the first DCI or valid PDSCHs according to the number of PDSCHs actually scheduled obtained in a time-domain scheduling information table indicated by the first DCI.

Further, in a case that the bundling configuration information is that there is no bundling of feedback information of different types of transport blocks corresponding to the same PDSCH and there is bundling of feedback information of different PDSCHs, the processor is configured to call the program in the memory to execute the following:

determining the number of transport blocks included in each type of transport blocks involved in bundling calculation in the PDSCHs scheduled by the first DCI, in a case that multi-codeword transmission is configured;
generating HARQ-ACK information for the multiple PDSCHs according to the number of transport blocks included in each type of transport blocks involved in bundling calculation in the PDSCHs scheduled by the first DCI and a corresponding decoding result.

Further, the processor is configured to call the program in the memory to execute at least one of the following:

determining the number of transport blocks included in each type of transport blocks according to the number of actually scheduled PDSCHs or valid PDSCHs and the scheduling states of the transport blocks;
uniformly calculating the number of transport blocks included in each type of transport blocks according to the number of actually scheduled PDSCHs or valid PDSCHs and the scheduling states of the transport blocks, wherein the numbers of transport blocks included in different types of transport blocks are the same.

Further, the processor is configured to call the program in the memory to execute at least one of the following:

according to the number of transport blocks included in each type of transport blocks and the corresponding decoding result, bundling the decoding results of each type of transport blocks to generate a bit sequence corresponding to each type of transport block;

adding up the numbers of transport blocks included in different types of transport blocks, and according to the number of all transport blocks after the adding, bundling the decoding results of all transport blocks to generate multiple feedback bits.

Further, the processor is configured to call the program in the memory to execute any one of following:

generating the HARQ-ACK information for the multiple PDSCHs by sequencing the feedback bits according to a rule of codewords being in an ascending order first and then PDSCHs being in an ascending order;

generating the HARQ-ACK information for the multiple PDSCHs by sequencing the feedback bits according to a rule of PDSCHs being in an ascending order first and then codewords being in an ascending order.

It should be noted that, the terminal device in the embodiments may implement all steps in the method in the above embodiments, and can achieve the same technical effect. The same part between this embodiment and the above method embodiment and the beneficial effect will not be described in details again.

Embodiments of the present disclosure also provide a computer readable storage medium having a computer program stored thereon, wherein steps of the hybrid automatic repeat request acknowledgement feedback method applied to a terminal device is implemented when the computer program is executed by a processor. The processor-readable storage medium may be any available medium or data storage device that a processor can access, includes, but is not limited to, a magnetic memory (such as a floppy disk, a hard disk, a magnetic tape, a magneto-optical (MO) disk, etc.), an optical memory (such as a Compack Disck (CD), a Digital Versatile Disc (DVD), a Blu-ray Disc (BD), a High-Definition Versatile Disc (HVD), etc.), and a semiconductor memory (such as a Readable Only Memory (ROM), an Erasable Programmable ROM (EPROM), an Electrically EPROM (EEPROM), etc.), a non-volatile memory (NAND FLASH), a solid-state hard disk (Solid State Disk or Solid State Drive (SSD)), and the like.

Those skilled in the art will appreciate that the embodiments of the present disclosure may be provided as methods, systems, or computer program products. Accordingly, the present disclosure may take the form of an entirely hardware embodiment, an entirely software embodiment, or some embodiments combining software and hardware aspects. The present disclosure may take the form of a computer program product implemented on one or more computer usable storage media (including, but not limited to, a magnetic disk storage, an optical storage, and the like) having computer usable program codes embodied therein.

This application is described with reference to flow diagrams and/or block diagrams of methods, devices (systems), and computer program products according to embodiments of the present disclosure. It should be understood that each of the flows and blocks in the flow diagrams and/or block diagrams, and combinations of the flows and/or blocks in the flow diagrams and/or block diagrams, may be implemented by computer executable instructions. These computer-executable instructions may be provided to a processor of a general purpose computer, a special purpose computer, an embedded processor, or other programmable data processing device to produce a machine, so that instructions to be executed by a processor of a computer or other programmable data processing device produce a means for implementing functions specified in one or more flows of the flowchart and one or more blocks of the block diagrams.

The processor-executable instructions may also be stored in a processor-readable memory capable of directing a computer or other programmable data processing device to operate in a particular manner, so that the instructions stored in the processor-readable memory to produce an article of manufacture including an instruction means, the instruction means implements the functions specified in one or more flows of a flow chart or one or more blocks in the block diagram.

These processor-executable instructions may also be loaded onto a computer or other programmable data processing device, such that a series of operational steps are performed on the computer or other programmable device to produce a computer-implemented process, and instructions executed on the computer or other programmable device thereby provide steps for implementing the functions specified in one or more flows of the flowchart and one or more blocks of the block diagram.

It should be noted that division of each module above is only a division of logical functions. In actual implementation, the functions can be fully or partially integrated into a physical entity, or can also be physically separated. These modules can all be implemented in the form of software invoked by processing components, or can also all be implemented in the form of hardware; some modules can also be implemented in the form of software invoked by processing components, and some modules can be implemented in the form of hardware. For example, the determination module can be a separate processing element, or can be integrated into a chip of the above device. In addition, the software can also be stored in the memory of the above device in the form of program codes, and can be processed by a certain processing element of the above device. Functions of the above determination module can implemented by a certain processing element invoking the program codes. The implementation of other modules is similar to the implementation of the determination module. In addition, all or part of these modules can be integrated together or implemented independently. The processing element described here may be an integrated circuit with signal processing capabilities. During the implementation process, each step of the above method or each of the above modules can be completed by integrated logic circuits of hardware in the processor element or software in the form of program codes.

For example, each module, unit, sub-unit or sub-module may be one or more integrated circuits configured to implement the above method, such as one or more Application Specific Integrated Circuits (ASICs), or one or microprocessors (digital signal processor, DSP), or one or more Field Programmable Gate Arrays (FPGA), etc. For another example, when one of the above modules is implemented in the form of a processing element invoking program codes, the processing element can be a general-purpose processor, such as a central processing unit (Central Processing Unit, CPU) or other processors that can invoke the program codes. For another example, these modules can be integrated together and implemented in the form of a system-on-a-chip (SOC).

The terms "first", "second", etc. in the description and claims of the present disclosure are used to distinguish similar objects and are not necessarily used to describe a specific order or sequence. It is to be understood that the terms so used are interchangeable under appropriate circumstances so that the embodiments of the present disclosure described herein may be implemented, for example, in sequences other than those illustrated or described herein. In addition, the terms "including" and "having" and any variations thereof are intended to cover non-exclusive inclusions, e.g., a process, method, system, product, or apparatus that encompasses a series of steps or units and need not be limited to those explicitly listed, and may include other steps or elements not expressly listed or inherent to the process, method, product or apparatus. In addition, the use of "and/or" in the description and claims indicates at least one of the connected objects, such as A and/or B and/or C, indicating the inclusion of 7 situations which are A alone, B alone, C alone, both A and B, both A and C, both B and C, and all of A, B and C. in which both B and C exist, both A and C exist, and A, B, and C all exist. Similarly, the use of "at least one of A and B" in this specification and in the claims should be understood to mean "A alone exists, B alone exists, or both A and B exi st. "

It will be apparent that those skilled in the art may make various changes and modifications to the present disclosure without departing from the spirit and scope of the present disclosure. As such, the present disclosure is also intended to include such modifications and changes if such modifications and changes fall within the scope of the claims of the present disclosure and their equivalents.

**Claims**

1. A Hybrid Automatic Repeat reQuest (HARQ) acknowledgement (ACK) feedback method, the method comprising:

    determining at least one scheduling state of at least one type of transport blocks corresponding to multiple physical downlink shared channels (PDSCHs) scheduled by first downlink control information (DCI), wherein the at least one scheduling state comprises an enabled state or a disabled state;
    generating HARQ-ACK information for the multiple PDSCHs according to the at least one scheduling state of the at least one type of transport blocks corresponding to the multiple PDSCHs scheduled by the first DCI and bundling configuration information for PDSCH feedback;
    wherein any type of transport blocks of the at least one type of transport blocks are transport blocks, having the same identifier, in the multiple PDSCHs scheduled by the first DCI.

2. The method according to claim 1, wherein, determining the at least one scheduling state of the at least one type of transport blocks corresponding to the multiple PDSCHs scheduled by the first DCI comprises:

    obtaining a scheduling state judgment manner;
    determining the at least one scheduling state of the at least one type of transport blocks corresponding to the multiple PDSCHs scheduled by the first DCI according to the scheduling state judgment manner;
    wherein scheduling state judgment manner comprises any one of the following:

        determining a scheduling state of each type of transport blocks corresponding to each PDSCH of the multiple PDSCHs scheduled by the first DCI, in one-time judgment;
        judging a scheduling state of each type of transport blocks corresponding to each PDSCH of the multiple PDSCHs scheduled by the first DCI, independently.

3. The method according to claim 2, wherein, obtaining the scheduling state judgment manner comprises at least one of following:

obtaining the scheduling state judgment manner indicated by a network device;
obtaining the scheduling state judgment manner agreed by a protocol;
determining the scheduling state judgment manner, according to a scheduling state judgment capability supported by the terminal device.

4. The method according to claim 3, wherein, in case of obtaining the scheduling state judgment manner indicated by the network device or determining the scheduling state judgment manner according to the scheduling state judgment capability supported by the terminal device, the method further comprises:

sending terminal capability information to the network device;
wherein, the terminal capability information comprises a scheduling state judgment manner supported by the terminal device.

5. The method according to claim 2, wherein, when the scheduling state judgment manner is to determine the scheduling state of each type of transport blocks corresponding to the multiple PDSCHs scheduled by the first DCI in one-time judgment, determining the at least one scheduling state of at least one type of transport blocks corresponding to the multiple PDSCHs scheduled by the first DCI comprises:

when the network device indicates that multi-codeword transmission is supported, determining a scheduling state of a first type of target transport blocks corresponding to the multiple PDSCHs scheduled by the first DCI, according to field information, corresponding to the first type of target transport blocks, in an information field of the first DCI;
wherein the first type of target transport blocks is any type of transport blocks in transport blocks indicated by the information field of the first DCI.

6. The method according to claim 5, wherein, determining the scheduling state of the first type of target transport blocks corresponding to the multiple PDSCHs scheduled by the first DCI, according to field information, corresponding to the first type of target transport blocks, in the information field of the first DCI comprises:

determining that the scheduling state of the first type of target transport blocks corresponding to the multiple PDSCHs scheduled by the first DCI is a disabled state when the field information corresponding to the first type of target transport blocks in the information field of the first DCI meets a first condition; or
determining that the scheduling state of the first type of target transport blocks corresponding to the multiple PDSCHs scheduled by the first DCI is an enabled state, when the field information corresponding to the first type of target transport blocks in the information field of the first DCI does not meet a first condition;
wherein the first condition comprises at least one of following:

a value of indication of a Modulation and Coding Scheme (MCS) is a first preset value;
values of part or all of bits in Redundancy Version (RV) indication are second preset values;
a value of a New Data Indicator (NDI) is a third preset value.

7. The method according to claim 2, wherein, when the scheduling state judgment manner is to judge the scheduling state of each type of transport blocks corresponding to the multiple PDSCHs scheduled by the first DCI, independently, determining the at least one scheduling state of at least one type of transport blocks corresponding to the multiple PDSCHs scheduled by the first DCI comprises:

determining a scheduling state of a second type of target transport blocks corresponding to a first PDSCH according to field information of the corresponding second type of target transport blocks in an information field of the first DCI, when the network device indicates that multi-codeword transmission is supported;
wherein the first PDSCH is any PDSCH of the multiple PDSCHs scheduled by the first DCI, and the second type of target transport blocks is any type of transport blocks of transport blocks indicated in the information field of the first DCI.

8. The method according to claim 7, wherein, determining the scheduling state of the second type of target transport blocks corresponding to the first PDSCH according to the field information of the corresponding second type of target transport blocks in the information field of the first DCI comprises:

determining that the scheduling state of the second type of target transport blocks corresponding to the first PDSCH is a disabled state, when the field information corresponding to the second type of target transport blocks in the information field of the first DCI meets a second condition; or
determining that the scheduling state of the second type of target transport blocks corresponding to the first PDSCH is an enabled state, when the field information corresponding to the second type of target transport blocks in the information field of the first DCI does not meet the second condition;
wherein the second condition comprises at least one of following:

a value of bits, corresponding to the first PDSCH, in indication of Modulation and Coding Scheme (MCS) is a fourth preset value;
a value of a bit, corresponding to the first PDSCH, in indication of a Redundancy Version (RV) is a fifth preset value;
a value of a bit, corresponding to the first PDSCH, in a New Data Indicator (NDI) is a sixth preset value.

9. The method according to any one of claims 2 to 8, wherein, after determining the at least one scheduling state of the at least one type of transport blocks corresponding to the multiple PDSCHs scheduled by the first DCI, the method further comprises any one of following:

determining that the network device does not send transport blocks when scheduling states of all corresponding transport blocks in an information field of the first DCI are determined to be a disabled state;
determining that the scheduling states of a third type of target transport blocks corresponding to a second PDSCH are a disabled state when scheduling states of all transport blocks corresponding to the second PDSCH in an information field of the first DCI are determined to be a disabled state,
wherein the second PDSCH is any PDSCH scheduled by the first DCI, the third type of target transport blocks is at least one transport block of transport blocks indicated in the information field of the first DCI.

10. The method according to claim 1, wherein, when bundling configuration information is that there is no bundling of feedback information of different types of transport blocks corresponding to the same PDSCH, and there is no bundling of feedback information of different PDSCHs, generating HARQ-ACK information for the multiple PDSCHs according to the at least one scheduling state of the at least one type of transport blocks corresponding to the multiple PDSCHs scheduled by the first DCI and bundling configuration information for PDSCH feedback comprises at least one of the following:

if codeword transmission is not configured or single-codeword transmission is configured, then configuring, to a seventh preset value, a value of a first feedback bit corresponding to a PDSCH not being scheduled, configuring, according to a decoding result, a bit value of a second feedback bit corresponding to a PDSCH being scheduled, and generating the HARQ-ACK information according to the first feedback bit and the second feedback bit;
if multi-codeword transmission is configured, configuring, to an eighth preset value, a value of a third feedback bit of a Transport Block (TB) corresponding to a PDSCH not being scheduled, configuring, to the eighth preset value, a value of a fourth feedback bit corresponding to a transport block in a disabled state corresponding to a PDSCH being scheduled; configuring, according to a decoding result, a bit value of a fifth feedback bit corresponding to a transport block in an enabled state corresponding to the PDSCH being scheduled, and generating the HARQ-ACK information according to the third feedback bit, the fourth feedback bit and the fifth feedback bit.

11. The method according to claim 10, wherein, generating the HARQ-ACK information according to the third feedback bit, the fourth feedback bit and the fifth feedback bit comprises:

sequencing the third feedback bit, the fourth feedback bit and the fifth feedback bit in a preset manner to generate the HARQ-ACK information;
wherein the preset manner comprises any one of the following:

sequencing the third feedback bit, the fourth feedback bit and the fifth feedback bit according to a rule of codewords being in an ascending order first and then PDSCHs being in an ascending order;
sequencing the third feedback bit, the fourth feedback bit and the fifth feedback bit according to a rule of PDSCHs being in an ascending order first and then codewords being in an ascending order.

12. The method according to claim 1, wherein, when the bundling configuration information is that there is bundling of feedback information of different types of transport blocks corresponding to the same PDSCH and there is no bundling of feedback information of different PDSCHs, or there is bundling of feedback information of different types of transport blocks corresponding to the same PDSCH and there is bundling of feedback information of different PDSCHs, generating the HARQ-ACK information for the multiple PDSCHs according to the at least one scheduling state of the at least one type of transport blocks corresponding to the multiple PDSCHs scheduled by the first DCI and bundling configuration information for PDSCH feedback comprises:

determining a value of a sixth feedback bit corresponding to at least one type of transport blocks corresponding to each PDSCH when configuring multi-codeword transmission;
determining a value of a seventh feedback bit corresponding to each PDSCH according to the value of the sixth feedback bit corresponding to at least one type of transport blocks corresponding to each PDSCH;
generating the HARQ-ACK information for the multiple PDSCHs according to the seventh feedback bit corresponding to each PDSCH.

13. The method according to claim 12, wherein, determining the value of the sixth feedback bit corresponding to at least one type of transport blocks corresponding to each PDSCH comprises at least one of following:

when a third PDSCH needs to transmit at least one type of transport blocks, setting, to a ninth preset value, the value of the sixth feedback bit of the transport block not transmitted;
when a fourth PDSCH needs to transmit at least one type of transport blocks and all the transport blocks corresponding to the fourth PDSCH are not transmitted, setting, to a tenth preset value, the values of the sixth feedback bits of all the transport blocks corresponding to the fourth PDSCH;
setting, according to a decoding result, a bit value of the sixth feedback bit of a transport block scheduled for transmission corresponding to a fifth PDSCH;
setting the sixth feedback bit corresponding to the transport block in the disable state to an eleventh preset value;
for a sixth PDSCH which is not scheduled or which is invalidly scheduled, setting a sixth feedback bit of a transport block corresponding to the sixth PDSCH to a twelfth preset value.

14. The method according to claim 12, wherein, generating the HARQ-ACK information for the multiple PDSCHs according to the seventh feedback bit corresponding to each PDSCH comprises:
generating the HARQ-ACK information for the multiple PDSCHs according to the seventh feedback bit corresponding to the scheduled PDSCH or the valid PDSCH.

15. The method according to claim 1, wherein, when the bundling configuration information is that there is no bundling of feedback information of different types of transport blocks corresponding to the same PDSCH and there is bundling of feedback information of different PDSCHs, generating the HARQ-ACK information for the multiple PDSCHs according to the at least one scheduling state of the at least one type of transport blocks corresponding to the multiple PDSCHs scheduled by the first DCI and bundling configuration information for PDSCH feedback comprises:

determining a quantity of PDSCHs scheduled by the first DCI or a quantity of valid PDSCHs, when single-codeword transmission is configured or no codeword transmission is configured;
grouping PDSCHs scheduled by the first DCI or valid PDSCHs;
bundling decoding results of PDSCHs in each group after grouping, to obtain an eighth feedback bit;
generating the HARQ-ACK information according to the eighth feedback bit corresponding to each group of PDSCHs.

16. The method according to claim 15, wherein, grouping the PDSCHs scheduled by the first DCI or the valid PDSCHs comprises at least one of the following:

if X is less than or equal to N, determining that Y is equal to X, and each group corresponds to one PDSCH;
if X is greater than N, determining that Y is equal to N, and determining the number of PDSCHs corresponding to each group in a first manner;
wherein, X is a quantity of valid PDSCHs or scheduled PDSCHs, Y is a quantity of groups, N is a quantity of bits of the HARQ-ACK information to be fed back, and both X and Y are integers greater than or equal to 1;
wherein the first manner comprises one of the following:

each bit of first (X mod N) bits in the HARQ-ACK information corresponds to a bundling result of decoding results of $\lfloor X/N \rfloor + 1$ PDSCHs, each bit of last N- (X mod N) bits in the HARQ-ACK information corresponds to a bundling result of decoding results of lXlNj PDSCHs;

each bit of last (X mod N) bits in the HARQ-ACK information corresponds to a bundling result of decoding results of $\lfloor X/N \rfloor+1$ PDSCHs; each bit of first N-(X mod N) bits in the HARQ-ACK information corresponds to a bundling result of decoding results of $\lfloor X/N \rfloor$ PDSCHs;

wherein 'Mod' represents finding a remainder, and [X/N] represents rounding down X/N.

17. The method according to claim 15, wherein, determining the quantity of PDSCHs scheduled by the first DCI or valid PDSCHs comprises:

determining the quantity of PDSCHs scheduled by the first DCI or valid PDSCHs according to a quantity of PDSCHs actually scheduled, the quantity of PDSCHs actually scheduled being obtained in a time-domain scheduling information table indicated by the first DCI.

18. The method according to claim 1, wherein, when the bundling configuration information is that there is no bundling of feedback information of different types of transport blocks corresponding to the same PDSCH and there is bundling of feedback information of different PDSCH, generating the HARQ-ACK information for the multiple PDSCHs according to the at least one scheduling state of the at least one type of transport blocks corresponding to the multiple PDSCHs scheduled by the first DCI and bundling configuration information for PDSCH feedback comprises:

determining a quantity of transport blocks comprised in each type of transport blocks, involved in bundling calculation, in the PDSCHs scheduled by the first DCI, when multi-codeword transmission is configured;
generating the HARQ-ACK information for the multiple PDSCHs according to the quantity of transport blocks comprised in each type of transport blocks, involved in bundling calculation, in the PDSCHs scheduled by the first DCI and a corresponding decoding result.

19. The method according to claim 18, wherein, determining the quantity of transport blocks comprised in each type of transport blocks, involved in bundling calculation, in the PDSCHs scheduled by the first DCI when multi-codeword transmission is configured comprises at least one of following:

determining the quantity of transport blocks comprised in each type of transport blocks according to a quantity of actually scheduled PDSCHs or valid PDSCHs and scheduling states of the transport blocks;
uniformly calculating a quantity of transport blocks comprised in each type of transport blocks according to a quantity of actually scheduled PDSCHs or valid PDSCHs and the scheduling states of the transport blocks, wherein the quantities of transport blocks comprised in different types of transport blocks are the same.

20. The method according to claim 18, wherein, generating the HARQ-ACK information for the multiple PDSCHs according to the quantity of transport blocks comprised in each type of transport blocks, involved in bundling calculation, in the PDSCHs scheduled by the first DCI and the corresponding decoding result comprises at least one of the following:

according to the quantity of transport blocks comprised in each type of transport blocks and the corresponding decoding result, bundling decoding results of each type of transport blocks to generate a bit sequence corresponding to each type of transport block;
adding up the quantities of transport blocks comprised in different types of transport blocks, and according to the quantity of all transport blocks after the adding, bundling the decoding results of all transport blocks to generate multiple feedback bits.

21. The method according to claim 18, wherein, generating the HARQ-ACK information for the multiple PDSCHs comprises any one of following:

generating the HARQ-ACK information for the multiple PDSCHs by sequencing the feedback bits according to a rule of codewords being in an ascending order first and then PDSCHs being in an ascending order;
generating the HARQ-ACK information for the multiple PDSCHs by sequencing the feedback bits according to a rule of PDSCHs being in an ascending order first and then codewords being in an ascending order.

22. A terminal device, wherein, the terminal device comprises a memory, a transceiver, and a processor,
the memory is configured to store a computer program, the transceiver is configured to send and/or receive data under control of the processor, and the processor is configured to read the computer program in the memory to implement following:

determining at least one scheduling state of at least one type of transport blocks corresponding to multiple physical downlink shared channels (PDSCHs) scheduled by first downlink control information (DCI), wherein the at least one scheduling state comprises an enabled state or a disabled state;
generating Hybrid Automatic Repeat reQuest acknowledgement (HARQ-ACK) information of the multiple PDSCHs according to the at least one scheduling state of the at least one type of transport blocks corresponding to the multiple PDSCHs scheduled by the first DCI and bundling configuration information for PDSCH feedback;
wherein any type of transport blocks of the at least one type of transport blocks are transport blocks, having the same identifier, in the multiple PDSCHs scheduled by the first DCI.

23. The terminal device according to claim 22, wherein, the processor is configured to read the computer program in the memory to implement following:

obtaining a scheduling state judgment manner;
determining the at least one scheduling state of the at least one type of transport blocks corresponding to the multiple PDSCHs scheduled by the first DCI according to the scheduling state judgment manner;
wherein scheduling state judgment manner comprises any one of the following:

determining a scheduling state of each type of transport blocks corresponding to each PDSCH of the multiple PDSCHs scheduled by the first DCI, in one-time judgment;
judging a scheduling state of each type of transport blocks corresponding to each PDSCH of the multiple PDSCHs scheduled by the first DCI, independently.

24. The terminal device according to claim 23, wherein, the processor is configured to read the computer program in the memory to implement at least one of following:

obtaining the scheduling state judgment manner indicated by a network device;
obtaining the scheduling state judgment manner agreed by a protocol;
determining the scheduling state judgment manner, according to a scheduling state judgment capability supported by the terminal device.

25. The terminal device according to claim 24, wherein, in case of obtaining the scheduling state judgment manner indicated by the network device or determining the scheduling state judgment manner according to the scheduling state judgment capability supported by the terminal device, the processor is configured to read the computer program in the memory to further implement following:

sending terminal capability information to the network device through the transceiver;
wherein, the terminal capability information comprises a scheduling state judgment manner supported by the terminal device.

26. The terminal device according to claim 23, wherein, when the scheduling state judgment manner is to determine the scheduling state of each type of transport blocks corresponding to the multiple PDSCHs scheduled by the first DCI in one-time judgment, the processor is configured to read the computer program in the memory to implement following:

when the network device indicates that multi-codeword transmission is supported, determining a scheduling state of a first type of target transport blocks corresponding to the multiple PDSCHs scheduled by the first DCI, according to field information, corresponding to the first type of target transport blocks, in an information field of the first DCI;
wherein the first type of target transport blocks is any type of transport blocks in transport blocks indicated by the information field of the first DCI.

27. The terminal device according to claim 26, wherein, the processor is configured to read the computer program in the memory to implement following:

determining that the scheduling state of the first type of target transport blocks corresponding to the multiple PDSCHs scheduled by the first DCI is a disabled state when the field information corresponding to the first type of target transport blocks in the information field of the first DCI meets a first condition; or

determining that the scheduling state of the first type of target transport blocks corresponding to the multiple PDSCHs scheduled by the first DCI is an enabled state, when the field information corresponding to the first type of target transport blocks in the information field of the first DCI does not meet a first condition;

wherein the first condition comprises at least one of following:

a value of indication of a Modulation and Coding Scheme (MCS) is a first preset value;
values of part or all of bits in Redundancy Version (RV) indication are second preset values;
a value of a New Data Indicator (NDI) is a third preset value.

28. The terminal device according to claim 23, wherein, when the scheduling state judgment manner is to judge the scheduling state of each type of transport blocks corresponding to the multiple PDSCHs scheduled by the first DCI, independently, the processor is configured to read the computer program in the memory to implement following:

determining a scheduling state of a second type of target transport blocks corresponding to a first PDSCH according to field information of the corresponding second type of target transport blocks in an information field of the first DCI, when the network device indicates that multi-codeword transmission is supported;
wherein the first PDSCH is any PDSCH of the multiple PDSCHs scheduled by the first DCI, and the second type of target transport blocks is any type of transport blocks of transport blocks indicated in the information field of the first DCI.

29. The terminal device according to claim 28, wherein, the processor is configured to read the computer program in the memory to implement following:

determining that the scheduling state of the second type of target transport blocks corresponding to the first PDSCH is a disabled state, when the field information corresponding to the second type of target transport blocks in the information field of the first DCI meets a second condition; or
determining that the scheduling state of the second type of target transport blocks corresponding to the first PDSCH is an enabled state, when the field information corresponding to the second type of target transport blocks in the information field of the first DCI does not meet the second condition;
wherein the second condition comprises at least one of following:

a value of bits, corresponding to the first PDSCH, in indication of Modulation and Coding Scheme (MCS) is a fourth preset value;
a value of a bit, corresponding to the first PDSCH, in indication of a Redundancy Version (RV) is a fifth preset value;
a value of a bit, corresponding to the first PDSCH, in a New Data Indicator (NDI) is a sixth preset value.

30. The terminal device according to any one of claims 23-29, wherein, the processor is configured to read the computer program in the memory to further implement any one of following:

determining that the network device does not send transport blocks when scheduling states of all corresponding transport blocks in an information field of the first DCI are determined to be a disabled state;
determining that the scheduling states of a third type of target transport blocks corresponding to a second PDSCH are a disabled state when scheduling states of all transport blocks corresponding to the second PDSCH in an information field of the first DCI are determined to be a disabled state,
wherein the second PDSCH is any PDSCH scheduled by the first DCI, the third type of target transport blocks is at least one transport block of transport blocks indicated in the information field of the first DCI.

31. The terminal device according to claim 22, wherein, when the bundling configuration information is that there is no bundling of feedback information of different types of transport blocks corresponding to the same PDSCH, and there is no bundling of feedback information of different PDSCHs, the processor is configured to read the computer program in the memory to further implement at least one of following::

if codeword transmission is not configured or single-codeword transmission is configured, then configuring, to a seventh preset value, a value of a first feedback bit corresponding to a PDSCH not being scheduled, configuring, according to a decoding result, a bit value of a second feedback bit corresponding to a PDSCH being scheduled, and generating the HARQ-ACK information according to the first feedback bit and the second feedback bit;

if multi-codeword transmission is configured, configuring, to an eighth preset value, a value of a third feedback bit of a Transport Block (TB) corresponding to a PDSCH not being scheduled, configuring, to the eighth preset value, a value of a fourth feedback bit corresponding to a transport block in a disabled state corresponding to a PDSCH being scheduled; configuring, according to a decoding result, a bit value of a fifth feedback bit corresponding to a transport block in an enabled state corresponding to the PDSCH being scheduled, and generating the HARQ-ACK information according to the third feedback bit, the fourth feedback bit and the fifth feedback bit.

32. The terminal device according to claim 31, wherein the processor is configured to read the computer program in the memory to implement following:

sequencing the third feedback bit, the fourth feedback bit and the fifth feedback bit in a preset manner to generate the HARQ-ACK information;
wherein the preset manner comprises any one of the following:

sequencing the third feedback bit, the fourth feedback bit and the fifth feedback bit according to a rule of codewords being in an ascending order first and then PDSCHs being in an ascending order;
sequencing the third feedback bit, the fourth feedback bit and the fifth feedback bit according to a rule of PDSCHs being in an ascending order first and then codewords being in an ascending order.

33. The terminal device according to claim 22, wherein, when the bundling configuration information is that there is bundling of feedback information of different types of transport blocks corresponding to the same PDSCH and there is no bundling of feedback information of different PDSCHs, or there is bundling of feedback information of different types of transport blocks corresponding to the same PDSCH and there is bundling of feedback information of different PDSCHs, the processor is configured to read the computer program in the memory to implement following:

determining a value of a sixth feedback bit corresponding to at least one type of transport blocks corresponding to each PDSCH when configuring multi-codeword transmission;
determining a value of a seventh feedback bit corresponding to each PDSCH according to the value of the sixth feedback bit corresponding to at least one type of transport blocks corresponding to each PDSCH;
generating the HARQ-ACK information for the multiple PDSCHs according to the seventh feedback bit corresponding to each PDSCH.

34. The terminal device according to claim 33, wherein, the processor is configured to read the computer program in the memory to implement at least one of following:

when a third PDSCH needs to transmit at least one type of transport blocks, setting, to a ninth preset value, the value of the sixth feedback bit of the transport block not transmitted;
when a fourth PDSCH needs to transmit at least one type of transport blocks and all the transport blocks corresponding to the fourth PDSCH are not transmitted, setting, to a tenth preset value, the values of the sixth feedback bits of all the transport blocks corresponding to the fourth PDSCH;
setting, according to a decoding result, a bit value of the sixth feedback bit of a transport block scheduled for transmission corresponding to a fifth PDSCH;
setting the sixth feedback bit corresponding to the transport block in the disable state to an eleventh preset value;
for a sixth PDSCH which is not scheduled or which is invalidly scheduled, setting a sixth feedback bit of a transport block corresponding to the sixth PDSCH to a twelfth preset value.

35. The terminal device according to claim 33, wherein, the processor is configured to read the computer program in the memory to implement following:
generating the HARQ-ACK information for the multiple PDSCHs according to the seventh feedback bit corresponding to the scheduled PDSCH or the valid PDSCH.

36. The terminal device according to claim 22, wherein, when the bundling configuration information is that there is no bundling of feedback information of different types of transport blocks corresponding to the same PDSCH and there is bundling of feedback information of different PDSCHs, the processor is configured to read the computer program in the memory to implement following:

determining a quantity of PDSCHs scheduled by the first DCI or a quantity of valid PDSCHs, when single-codeword transmission is configured or no codeword transmission is configured;

grouping PDSCHs scheduled by the first DCI or valid PDSCHs;

bundling decoding results of PDSCHs in each group after grouping, to obtain an eighth feedback bit;

generating the HARQ-ACK information according to the eighth feedback bit corresponding to each group of PDSCHs.

37. The terminal device according to claim 36, wherein, the processor is configured to read the computer program in the memory to implement at least one of following:

if X is less than or equal to N, determining that Y is equal to X, and each group corresponds to one PDSCH;

if X is greater than N, determining that Y is equal to N, and determining the number of PDSCHs corresponding to each group in a first manner;

wherein, X is a quantity of valid PDSCHs or scheduled PDSCHs, Y is a quantity of groups, N is a quantity of bits of the HARQ-ACK information to be fed back, and both X and Y are integers greater than or equal to 1;

wherein the first manner comprises one of the following:

each bit of first (X mod N) bits in the HARQ-ACK information corresponds to a bundling result of decoding results of $\lfloor X/N \rfloor + 1$ PDSCHs, each bit of last N- (X mod N) bits in the HARQ-ACK information corresponds to a bundling result of decoding results of $\lfloor X/N \rfloor$ PDSCHs;

each bit of last (X mod N) bits in the HARQ-ACK information corresponds to a bundling result of decoding results of $\lfloor X/N \rfloor + 1$ PDSCHs; each bit of first N-(X mod N) bits in the HARQ-ACK information corresponds to a bundling result of decoding results of $\lfloor X/N \rfloor$ PDSCHs;

wherein 'Mod' represents finding a remainder, and $\lfloor X/N \rfloor$ represents rounding down X/N.

38. The terminal device according to claim 36, wherein, the processor is configured to read the computer program in the memory to implement following:

determining the quantity of PDSCHs scheduled by the first DCI or valid PDSCHs according to a quantity of PDSCHs actually scheduled, the quantity of PDSCHs actually scheduled being obtained in a time-domain scheduling information table indicated by the first DCI.

39. The terminal device according to claim 22, wherein, when the bundling configuration information is that there is no bundling of feedback information of different types of transport blocks corresponding to the same PDSCH and there is bundling of feedback information of different PDSCH, the processor is configured to read the computer program in the memory to implement following:

determining a quantity of transport blocks comprised in each type of transport blocks, involved in bundling calculation, in the PDSCHs scheduled by the first DCI, when multi-codeword transmission is configured;

generating the HARQ-ACK information for the multiple PDSCHs according to the quantity of transport blocks comprised in each type of transport blocks, involved in bundling calculation, in the PDSCHs scheduled by the first DCI and a corresponding decoding result.

40. The terminal device according to claim 39, wherein, the processor is configured to read the computer program in the memory to implement at least one of following:

determining the quantity of transport blocks comprised in each type of transport blocks according to a quantity of actually scheduled PDSCHs or valid PDSCHs and scheduling states of the transport blocks;

uniformly calculating a quantity of transport blocks comprised in each type of transport blocks according to a quantity of actually scheduled PDSCHs or valid PDSCHs and the scheduling states of the transport blocks, wherein the quantities of transport blocks comprised in different types of transport blocks are the same.

41. The terminal device according to claim 39, wherein, the processor is configured to read the computer program in the memory to implement at least one of following:

according to the quantity of transport blocks comprised in each type of transport blocks and the corresponding decoding result, bundling decoding results of each type of transport blocks to generate a bit sequence corresponding to each type of transport block;

adding up the quantities of transport blocks comprised in different types of transport blocks, and according to the quantity of all transport blocks after the adding, bundling the decoding results of all transport blocks to generate multiple feedback bits.

42. The terminal device according to claim 39, wherein, the processor is configured to read the computer program in the memory to implement any one of following:

generating the HARQ-ACK information for the multiple PDSCHs by sequencing the feedback bits according to a rule of codewords being in an ascending order first and then PDSCHs being in an ascending order;

generating the HARQ-ACK information for the multiple PDSCHs by sequencing the feedback bits according to a rule of PDSCHs being in an ascending order first and then codewords being in an ascending order.

43. A Hybrid Automatic Repeat reQuest (HARQ) acknowledgement (ACK) feedback apparatus, which is applied to a terminal device, wherein, the apparatus comprises:

a first determining unit, configured for determining at least one scheduling state of at least one type of transport blocks corresponding to multiple physical downlink shared channels (PDSCHs) scheduled by first downlink control information (DCI), wherein the at least one scheduling state comprises an enabled state or a disabled state;

a generating unit, configured for generating HARQ-ACK information for the multiple PDSCHs according to the at least one scheduling state of the at least one type of transport blocks corresponding to the multiple PDSCHs scheduled by the first DCI and bundling configuration information for PDSCH feedback;

wherein any type of transport blocks of the at least one type of transport blocks are transport blocks, having the same identifier, in the multiple PDSCHs scheduled by the first DCI.

44. The apparatus according to claim 43, wherein, the first determining unit is configured for:

obtaining a scheduling state judgment manner;

determining at least one scheduling state of at least one type of transport blocks corresponding to the multiple PDSCHs scheduled by the first DCI according to the scheduling state judgment manner,

wherein the scheduling state judgment manner comprises any one of following:

determining a scheduling state of each type of transport blocks corresponding to each PDSCH of the multiple PDSCHs scheduled by the first DCI, in one-time judgment;

judging a scheduling state of each type of transport blocks corresponding to each PDSCH of the multiple PDSCHs scheduled by the first DCI, independently.

45. The apparatus according to claim 44, wherein obtaining the scheduling state judgment manner comprises at least one of the following:

obtaining the scheduling state judgment manner indicated by a network device;

obtaining the scheduling state judgment manner agreed by a protocol;

determining the scheduling state judgment manner, according to a scheduling state judgment capability supported by the terminal device.

46. The apparatus according to claim 45, wherein, in case of obtaining the scheduling state judgment manner indicated by the network device or determining the scheduling state judgment manner according to the scheduling state judgment capability supported by the terminal device, the apparatus further comprises:

a sending unit, configured for sending terminal capability information to the network device; wherein, the terminal capability information comprises the scheduling state judgment manner supported by the terminal device.

47. The apparatus according to claim 45, wherein in case of the scheduling state judgment manner of determining the scheduling state of each type of transport blocks corresponding to each PDSCH of the multiple PDSCHs scheduled by the first DCI in one-time judgment, implementation of determining the scheduling state of at least one type of transport blocks corresponding to the multiple PDSCHs scheduled by the first DCI includes:

when the network device indicates that multi-codeword transmission is supported, determining a scheduling state of a first type of target transport blocks corresponding to each of the multiple PDSCHs scheduled by the first DCI, according to field information, corresponding to the first type of target transport blocks, in an information field of the first DCI; wherein the first type of target transport blocks is any type of transport blocks of the transport blocks indicated by the information field of the first DCI.

48. The apparatus according to claim 47, wherein determining the scheduling state of the first type of target transport blocks corresponding to each PDSCH of the multiple PDSCHs scheduled by the first DCI, according to field information, corresponding to the first type of target transport blocks, in the information field of the first DCI comprises:

   determining that the scheduling state of the first type of target transport blocks corresponding to each PDSCH of the multiple PDSCHs scheduled by the first DCI is a disabled state when the field information corresponding to the first type of target transport blocks in the information field of the first DCI meets a first condition; or determining that the scheduling state of the first type of target transport blocks corresponding to each PDSCH of the multiple PDSCHs scheduled by the first DCI is an enabled state, when the field information corresponding to the first type of target transport blocks in the information field of the first DCI does not meet a first condition; wherein the first condition comprises at least one of following:

      a value of indication of a Modulation and Coding Scheme (MCS) is a first preset value;
      values of part or all of bits in Redundancy Version (RV) indication are second preset values;
      a value of a New Data Indicator (NDI) is a third preset value.

49. The apparatus according to claim 44, wherein in case of the scheduling state judgment manner of judging the scheduling state of each type of transport blocks corresponding to each PDSCH of the multiple PDSCHs scheduled by the first DCI, independently, implementation of determining the scheduling state of at least one type of transport blocks corresponding to the multiple PDSCHs scheduled by the first DCI comprises:

   determining a scheduling state of a second type of target transport blocks corresponding to a first PDSCH according to field information of the corresponding second type of target transport blocks in an information field of the first DCI, when the network device indicates that multi-codeword transmission is supported; wherein the first PDSCH is any PDSCH of the multiple PDSCHs scheduled by the first DCI, and the second type of target transport blocks is any type of transport blocks of transport blocks indicated in the information field of the first DCI.

50. The apparatus according to claim 49, wherein determining the scheduling state of the second type of target transport blocks corresponding to the first PDSCH according to the field information of the corresponding second type of target transport blocks in the information field of the first DCI comprises:

   determining that the scheduling state of the second type of target transport blocks corresponding to the first PDSCH is a disabled state, when the field information corresponding to the second type of target transport blocks in the information field of the first DCI meets a second condition; or determining that the scheduling state of the second type of target transport blocks corresponding to the first PDSCH is an enabled state, when the field information corresponding to the second type of target transport blocks in the information field of the first DCI does not meet the second condition; wherein the second condition comprises at least one of following:

      a value of bits, corresponding to the first PDSCH, in indication of Modulation and Coding Scheme (MCS) is a fourth preset value;
      a value of a bit, corresponding to the first PDSCH, in indication of a Redundancy Version (RV) is a fifth preset value;
      a value of a bit, corresponding to the first PDSCH, in a New Data Indicator (NDI) is a sixth preset value.

51. The apparatus according to any one of claims 44-50, further comprising:

   a second determining unit, configured for, after the first determining unit determines the scheduling state of at least one type of transport blocks corresponding to the multiple PDSCHs scheduled by the first DCI, determining that the network device does not send transport blocks when it is determined that the scheduling states of all corresponding transport blocks in the information field of the first DCI are the disabled state;
   a third determining unit, configured for, after the first determining unit determines the scheduling state of at least one type of transport blocks corresponding to the multiple PDSCHs scheduled by the first DCI, determining that the scheduling states of the third type of target transport blocks corresponding to the second PDSCH are the disabled state when it is determined that the scheduling states of all transport blocks corresponding to the second PDSCH in the information field of the first DCI are the disabled state, wherein the second PDSCH is any PDSCH scheduled by the first DCI, the third type of target transport blocks is at least one transport block of the transport blocks indicated in the information field of the first DCI.

52. The apparatus according to claim 43, wherein when bundling configuration information is that there is no bundling of feedback information of different types of transport blocks corresponding to the same PDSCH, and there is no bundling of feedback information of different PDSCHs, the generating unit is configured for implementing at least one of the following:

if codeword transmission is not configured or single-codeword transmission is configured, then configuring, to a seventh preset value, a value of a first feedback bit corresponding to a PDSCH not being scheduled, configuring, according to a decoding result, a bit value of a second feedback bit corresponding to a PDSCH being scheduled, and generating the HARQ-ACK information according to the first feedback bit and the second feedback bit;
if multi-codeword transmission is configured, configuring, to an eighth preset value, a value of a third feedback bit of a Transport Block (TB) corresponding to a PDSCH not being scheduled, configuring, to the eighth preset value, a value of a fourth feedback bit corresponding to a transport block in a disabled state corresponding to a PDSCH being scheduled; configuring, according to a decoding result, a bit value of a fifth feedback bit corresponding to a transport block in an enabled state corresponding to the PDSCH being scheduled, and generating the HARQ-ACK information according to the third feedback bit, the fourth feedback bit and the fifth feedback bit.

53. The apparatus according to claim 52, wherein generating the HARQ-ACK information according to the third feedback bit, the fourth feedback bit and the fifth feedback bit comprises:

sequencing the third feedback bit, the fourth feedback bit and the fifth feedback bit in a preset manner to generate the HARQ-ACK information;
wherein the preset manner comprises any one of the following:

sequencing the third feedback bit, the fourth feedback bit and the fifth feedback bit according to a rule of codewords being in an ascending order first and then PDSCHs being in an ascending order;
sequencing the third feedback bit, the fourth feedback bit and the fifth feedback bit according to a rule of PDSCHs being in an ascending order first and then codewords being in an ascending order.

54. The apparatus according to claim 43, wherein when the bundling configuration information is that there is bundling of feedback information of different types of transport blocks corresponding to the same PDSCH and there is no bundling of feedback information of different PDSCHs, or there is bundling of feedback information of different types of transport blocks corresponding to the same PDSCH and there is bundling of feedback information of different PDSCHs, the generating unit further implements following:

determining a value of a sixth feedback bit corresponding to at least one type of transport blocks corresponding to each PDSCH when configuring multi-codeword transmission;
determining a value of a seventh feedback bit corresponding to each PDSCH according to the value of the sixth feedback bit corresponding to at least one type of transport blocks corresponding to each PDSCH;
generating the HARQ-ACK information for the multiple PDSCHs according to the seventh feedback bit corresponding to each PDSCH.

55. The apparatus according to claim 54, wherein determining the value of the sixth feedback bit corresponding to at least one type of transport blocks corresponding to each PDSCH comprises at least one of following:

when a third PDSCH needs to transmit at least one type of transport blocks, setting, to a ninth preset value, the value of the sixth feedback bit of the transport block not transmitted;
when a fourth PDSCH needs to transmit at least one type of transport blocks and all the transport blocks corresponding to the fourth PDSCH are not transmitted, setting, to a tenth preset value, the values of the sixth feedback bits of all the transport blocks corresponding to the fourth PDSCH;
setting, according to the decoding result, a bit value of the sixth feedback bit of the transport block scheduled for transmission corresponding to a fifth PDSCH;

setting the sixth feedback bit corresponding to the transport block in the disable state to an eleventh preset value;
for a sixth PDSCH which is not scheduled or which is invalidly scheduled, setting a sixth feedback bit of a transport block corresponding to the sixth PDSCH to a twelfth preset value.

56. The apparatus according to claim 54, wherein, generating the HARQ-ACK information for the multiple PDSCHs according to the seventh feedback bit corresponding to each PDSCH comprises:
generating the HARQ-ACK information for the multiple PDSCHs according to the seventh feedback bit corresponding to the scheduled PDSCH or the valid PDSCH.

57. The apparatus according to claim 43, wherein when the bundling configuration information is that there is no bundling of feedback information of different types of transport blocks corresponding to the same PDSCH and there is bundling of feedback information of different PDSCHs, the generating unit is specifically configured for:

determining a quantity of PDSCHs scheduled by the first DCI or a quantity of valid PDSCHs, when single-codeword transmission is configured or no codeword transmission is configured;
grouping PDSCHs scheduled by the first DCI or valid PDSCHs;
bundling decoding results of PDSCHs in each group after grouping, to obtain an eighth feedback bit;
generating the HARQ-ACK information according to the eighth feedback bit corresponding to each group of PDSCHs.

58. The apparatus according to claim 57, wherein grouping the PDSCHs scheduled by the first DCI or the valid PDSCHs comprises at least one of the following:

if X is less than or equal to N, determining that Y is equal to X, and each group corresponds to one PDSCH;
if X is greater than N, determining that Y is equal to N, and determining the number of PDSCHs corresponding to each group in a first manner;
wherein, X is a quantity of valid PDSCHs or scheduled PDSCHs, Y is a quantity of groups, N is a quantity of bits of the HARQ-ACK information to be fed back, and both X and Y are integers greater than or equal to 1;
wherein the first manner comprises one of the following:

each bit of first (X mod N) bits in the HARQ-ACK information corresponds to a bundling result of decoding results of $\lfloor X/N \rfloor + 1$ PDSCHs, each bit of last N- (X mod N) bits in the HARQ-ACK information corresponds to a bundling result of decoding results of $\lfloor X/N \rfloor$ PDSCHs;
each bit of last (X mod N) bits in the HARQ-ACK information corresponds to a bundling result of decoding results of $\lfloor X/N \rfloor + 1$ PDSCHs; each bit of first N-(X mod N) bits in the HARQ-ACK information corresponds to a bundling result of decoding results of $\lfloor X/N \rfloor$ PDSCHs;
wherein 'Mod' represents finding a remainder, and $\lfloor X/N \rfloor$ represents rounding down X/N.

59. The apparatus according to claim 57, wherein determining the quantity of PDSCHs scheduled by the first DCI or valid PDSCHs comprises:
determining the quantity of PDSCHs scheduled by the first DCI or valid PDSCHs according to a quantity of PDSCHs actually scheduled, the quantity of PDSCHs actually scheduled being obtained in a time-domain scheduling information table indicated by the first DCI.

60. The apparatus according to claim 43, wherein, when the bundling configuration information is that there is no bundling of feedback information of different types of transport blocks corresponding to the same PDSCH and there is bundling of feedback information of different PDSCHs, the generating unit is specifically configured for:

determining a quantity of transport blocks comprised in each type of transport blocks, involved in bundling calculation, in the PDSCHs scheduled by the first DCI, when multi-codeword transmission is configured;
generating the HARQ-ACK information for the multiple PDSCHs according to the quantity of transport blocks comprised in each type of transport blocks, involved in bundling calculation, in the PDSCHs scheduled by the first DCI and a corresponding decoding result.

**61.** The apparatus according to claim 60, wherein determining the quantity of transport blocks comprised in each type of transport blocks, involved in bundling calculation, in the PDSCHs scheduled by the first DCI when multi-codeword transmission is configured comprises at least one of following:

determining the quantity of transport blocks comprised in each type of transport blocks according to a quantity of actually scheduled PDSCHs or valid PDSCHs and scheduling states of the transport blocks;
uniformly calculating a quantity of transport blocks comprised in each type of transport blocks according to a quantity of actually scheduled PDSCHs or valid PDSCHs and the scheduling states of the transport blocks, wherein the quantities of transport blocks comprised in different types of transport blocks are the same.

**62.** The apparatus according to claim 60, wherein generating the HARQ-ACK information for the multiple PDSCHs according to the quantity of transport blocks comprised in each type of transport blocks, involved in bundling calculation, in the PDSCHs scheduled by the first DCI and the corresponding decoding result comprises at least one of the following:

according to the quantity of transport blocks comprised in each type of transport blocks and the corresponding decoding result, bundling decoding results of each type of transport blocks to generate a bit sequence corresponding to each type of transport block;
adding up the quantities of transport blocks comprised in different types of transport blocks, and according to the quantity of all transport blocks after the adding, bundling the decoding results of all transport blocks to generate multiple feedback bits.

**63.** The apparatus according to claim 60, wherein generating the HARQ-ACK information for the multiple PDSCHs comprises any one of following:

generating the HARQ-ACK information for the multiple PDSCHs by sequencing the feedback bits according to a rule of codewords being in an ascending order first and then PDSCHs being in an ascending order;
generating the HARQ-ACK information for the multiple PDSCHs by sequencing the feedback bits according to a rule of PDSCHs being in an ascending order first and then codewords being in an ascending order.

**64.** A processor-readable storage medium wherein, the processor-readable storage medium stores a computer program, wherein when the computer program is executed by a processor, the processor implements the method according to any one of claims 1 to 21.

12

Base station

11

User
equipment

**Fig.1**

| Determining at least one scheduling state of at least one type of transport blocks corresponding to PDSCHs scheduled by first DCI | S201 |

↓

| Generating HARQ-ACK information for the PDSCHs according to the at least one scheduling state of the at least one type of transport blocks corresponding to the PDSCHs scheduled by the first DCI and bundling configuration information for PDSCH feedback | S202 |

**Fig.2**

|  | PDSCH-1 | PDSCH-2 | PDSCH-3 | PDSCH-4 |
|-----|---------|---------|---------|---------|
| TB1 | b(0,0) | b(0,1) | b(0,2) | b(0,3) |
| TB1 | b(1,0) | b(1,1) | b(1,2) | b(1,3) |

**Fig.3**

PUCCH resource indication

PUCCH

P1    P2    P3    P4    P5    P6    P7

DCI

PDSCH

PUCCH
carrying
HARQ-ACK

4-bit HARQ-ACK
information

| 0/1 | 0/1 | 0/1 | 0/1 |

Bundling of
grouping of 7
PDSCH
feedbacks

| 0/1 | 0/1 | 0/1 | 0/1 | 0/1 | 0/1 | 0/1 |
| P1 | P2 | P3 | P4 | P5 | P6 | P7 |

**Fig.4**

|  | PDSCH-1 | PDSCH-2 | PDSCH-3 | PDSCH-4 | PDSCH-5 | PDSCH-6 | PDSCH-7 | PDSCH-8 |
|---|---|---|---|---|---|---|---|---|
| TB1 | Y | Y | N | N | Y | Y | Y | Y |
| TB1 | Y | Y | Y | N | N | N | N | N |

**Fig.5**

| | PDSCH-1 | PDSCH-2 | PDSCH-3 | PDSCH-4 | PDSCH-5 | PDSCH-6 | PDSCH-7 | PDSCH-8 |
|------|---------|---------|---------|---------|---------|---------|---------|---------|
| TB1 | P11(Y) | P12(Y) | P13(N) | P14(N) | P15(Y) | P16(Y) | P17(Y) | P18(Y) |
| TB1 | P21(Y) | P22(Y) | P23(Y) | P24(N) | P25(N) | P26(N) | P27(N) | P28(N) |

Fig.6

Fig.7

Fig.8

# EP 4 429 143 A1

| INTERNATIONAL SEARCH REPORT | International application No. |
|---|---|
| | **PCT/CN2022/126653** |

**A. CLASSIFICATION OF SUBJECT MATTER**

H04L 1/18(2023.01)i

According to International Patent Classification (IPC) or to both national classification and IPC

**B. FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNABS; CNTXT; CNKI; VEN; ENTXT; 3GPP; IEEE: 传输块, 反馈, 调度, 状态, 使能, 去使能, 捆绑, 相同, 标识, transport, block, feedback, scheduling, status, enabled, bundle, same, identity, DCI, NDI, PDSCH, RV, bundling, HARQ, ACK, MCS, TB

**C. DOCUMENTS CONSIDERED TO BE RELEVANT**

| Category* | Citation of document, with indication, where appropriate, of the relevant passages | Relevant to claim No. |
|---|---|---|
| Y | CN 109478958 A (HUAWEI TECHNOLOGIES CO., LTD.) 15 March 2019 (2019-03-15) description, paragraphs [0055]-[0164] | 1, 22, 43, 64 |
| Y | CN 110291737 A (JRD COMMUNICATION INC.) 27 September 2019 (2019-09-27) description, paragraphs [0030]-[0037] | 1, 22, 43, 64 |
| A | CN 110875814 A (HUAWEI TECHNOLOGIES CO., LTD.) 10 March 2020 (2020-03-10) entire document | 1-64 |
| A | CN 111316756 A (ERICSSON TELEFON AB L M) 19 June 2020 (2020-06-19) entire document | 1-64 |
| A | CN 110086583 A (TELECOMMUNICATIONS TECHNOLOGY RESEARCH INSTITUTE CO., LTD.) 02 August 2019 (2019-08-02) entire document | 1-64 |
| A | WO 2021032266 A1 (NOKIA TECHNOLOGIES OY) 25 February 2021 (2021-02-25) entire document | 1-64 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 January 2023** | **11 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

49

**INTERNATIONAL SEARCH REPORT**
Information on patent family members

International application No.

**PCT/CN2022/126653**

| Patent document cited in search report | | | Publication date (day/month/year) | Patent family member(s) | | | Publication date (day/month/year) |
|---|---|---|---|---|---|---|---|
| CN | 109478958 | A | 15 March 2019 | WO | 2018000373 | A1 | 04 January 2018 |
| CN | 110291737 | A | 27 September 2019 | WO | 2018113589 | A1 | 28 June 2018 |
|  |  |  |  | GB | 201621880 | D0 | 01 February 2017 |
| CN | 110875814 | A | 10 March 2020 | US | 2021184803 | A1 | 17 June 2021 |
|  |  |  |  | WO | 2020048364 | A1 | 12 March 2020 |
|  |  |  |  | EP | 3832938 | A1 | 09 June 2021 |
| CN | 111316756 | A | 19 June 2020 | WO | 2019096013 | A1 | 23 May 2019 |
|  |  |  |  | EP | 3711453 | A1 | 23 September 2020 |
|  |  |  |  | US | 2020274648 | A1 | 27 August 2020 |
| CN | 110086583 | A | 02 August 2019 | WO | 2019144833 | A1 | 01 August 2019 |
| WO | 2021032266 | A1 | 25 February 2021 |  | None |  |  |

Form PCT/ISA/210 (patent family annex) (January 2015)

**REFERENCES CITED IN THE DESCRIPTION**

**Patent documents cited in the description**

- CN 202111308683